# EUROPEAN PATENT SPECIFICATION

(11) **EP 4 124 140 B1**
(45) Date of publication and mention of the grant of the patent: **13.05.2026**
(21) Application number: 21187055.5
(22) Date of filing: 21.07.2021
(51) Int. Cl.: H04W 74/0833, H04W 72/115

(54) **USER EQUIPMENT AND BASE STATION INVOLVED IN TRANSMISSION OF SMALL DATA**
AN DER ÜBERTRAGUNG VON KLEINDATEN BETEILIGTES BENUTZERGERÄT UND BASISSTATION
ÉQUIPEMENT UTILISATEUR ET STATION DE BASE IMPLIQUÉS DANS LA TRANSMISSION DE PETITES DONNÉES

(43) Date of publication of application: 25.01.2023
(73) Proprietor: Panasonic Intellectual Property Corporation of America, Torrance, CA 90504 (US)
(72) Inventor: SHAH, Rikin, 63225 Langen (DE); SUZUKI, Hidetoshi, Kadoma-shi, 571-8501 (JP)
(74) Representative: Grünecker Patent- und Rechtsanwälte PartG mbB

(56) References cited:
- ZTE CORPORATION ET AL: "Control plane aspects of SDT", vol. RAN WG2, no. e-meeting ;20201102 - 20201113, 22 October 2020 (2020-10-22), XP051941254, Retrieved from the Internet <URL:https://ftp.3gpp.org/tsg_ran/WG2_RL2/TSGR2_112-e/Docs/R2-2009190.zip> [retrieved on 20201022]
- ASIA PACIFIC TELECOM ET AL: "CG-SDT based on beam operation", vol. RAN WG2, no. electronic; 20210412 - 20210420, 1 April 2021 (2021-04-01), XP051992038, Retrieved from the Internet <URL:https://ftp.3gpp.org/tsg_ran/WG2_RL2/TSGR2_113bis-e/Docs/R2-2103265.zip> [retrieved on 20210401]

## Description

### FIELD OF THE PRESENT DISCLOSURE

The present disclosure is directed to a user equipment, a method performed by a user equipment and to a base station.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of 3GGP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

ZTE CORPORATION, SANECHIPS, "Control plane aspects of SDT", 3GPP TSG RAN-2 #112e, R2-2009190, November 2-13, 2020, discusses control plane aspects of SDT, particularly cell reselection and failure handling.

ASIA PACIFIC TELECOM, FGI, "CG-SDT based on beam operation", 3GPP TSG RAN WG2 Meeting #113, R2-2103265, April 12-20, 2021, discusses issues on beam operation, and particularly how to handle the beam failure condition.

### SUMMARY

The invention is defined by the independent claims, the dependent claims define particular embodiments of the invention.

One non-limiting and exemplary embodiment facilitates providing procedures for facilitating a UE to perform an improved small-data transmission. Furthermore, at least one part of the invention is based on the "First implementation of time trigger control mechanism - Timer". Examples, aspects and embodiments not necessarily falling under the scope of the claims are provided in the application to better understand the invention.

In an embodiment, the techniques disclosed here feature a user equipment, UE, comprising the following. A processor of the UE determines that small data has become available for transmission. The available small data is to be transmitted using periodic resources without a prior scheduling request from the UE. Transmitting the available small-data using the periodic resources includes that the processor determines one of a plurality of synchronization signal blocks having a signal quality above a signal quality threshold. In case the processor determines there is no synchronization signal block having the signal quality above the signal quality threshold :
- the processor, when in operation, operates a time trigger control mechanism , and
- the processor, when in operation, controls the UE to perform an alternative small-data transmission mechanism , instead of transmitting the available small-data using the periodic resources, according to the operated time trigger control mechanism.

The alternative small-data transmission mechanism includes one of:
- transmitting, by a transmitter of the UE, the available small data using a random access procedure , and
- performing by the UE a cell-reselection procedure for selecting a new radio cell in which to transmit the available small data.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6 and 7**: illustrate the contention-based and contention-free RACH procedure;
- **Fig. 8**: illustrates the possible RRC state changes,
- **Fig. 9**: illustrates a message exchange of the prior art for uplink data transmission, including a state change of the UE from Inactive to Connected state;
- **Fig. 10 and 11**: illustrate an exemplary four-step RACH respectively two-step RACH usable for small-data uplink transmissions for an RRC_INACTIVE UE,
- **Fig. 12**: illustrates a configured grant resources and two UEs using the configured grant resources for transmission of small data,
- **Fig. 13**: illustrates beam transmissions by a gNB, respectively including the SSB,
- **Fig. 14**: an exemplary and simplified structure of a UE and gNB,
- **Fig. 15**: illustrates a structure of the UE according to an exemplary implementation of an improved small-data transmission procedure,
- **Fig. 16**: is a flow diagram for the UE behavior, according to an exemplary implementation of the improved small-data transmission procedure,
- **Fig. 17**: illustrates a structure of the base station according to an exemplary implementation of an improved small-data transmission procedure,
- **Fig. 18**: is a flow diagram for the base station behavior that participates in an exemplary implementation of the improved small-data transmission procedure,
- **Fig. 19**: is a signaling diagram illustrating an exemplary exchange between the UE and the gNB for an implementation of the improved small-data transmission procedure,
- **Fig. 20**: is a flow diagram for the UE behavior, according to a first, timer-based, implementation of the improved small-data transmission procedure,
- **Fig. 21**: illustrates configured grant resources, alternative small-data transmission random access occasions, and the UE operation for a first, timer-based, implementation of the improved small-data transmission procedure, in a scenario where the small data is eventually transmitted using a periodic resource occasion,
- **Fig. 22**: illustrates configured grant resources, alternative small-data transmission random access occasions, and the UE operation for a first, timer-based, implementation of the improved small-data transmission procedure, in a scenario where the small data is eventually transmitted in an alternative manner using a random access occasion,
- **Fig. 23**: is a flow diagram for the UE behavior, according to a second, counter-based, implementation of the improved small-data transmission procedure,
- **Fig. 24**: illustrates configured grant resources, alternative small-data transmission random access occasions, and the UE operation for a second, counter-based, implementation of the improved small-data transmission procedure, in a scenario where the small data is eventually transmitted using a periodic resource occasion,
- **Fig. 25**: illustrates configured grant resources, alternative small-data transmission random access occasions, and the UE operation for a second, counter-based, implementation of the improved small-data transmission procedure, in a scenario where the small data is eventually transmitted in an alternative manner using a random access occasion,
- **Fig. 26**: is a flow diagram for the UE behavior, according to a third, timer and counter-based, implementation of the improved small-data transmission procedure,
- **Fig. 27**: is a flow diagram for the UE behavior, according to a fourth, time-period-based, implementation of the improved small-data transmission procedure,
- **Fig. 28**: illustrates configured grant resources, alternative small-data transmission random access occasions, and the UE operation for a fourth, time-period -based, implementation of the improved small-data transmission procedure, in a scenario where the small data is transmitted in an alternative manner using a random access occasion,
- **Fig. 29**: illustrates configured grant resources, alternative small-data transmission random access occasions, and the UE operation for a fourth, time-period-based, implementation of the improved small-data transmission procedure, in a scenario where the small data is transmitted in an alternative manner using a random access occasion after the end of the time period,
- **Fig. 30**: illustrates configured grant resources, alternative small-data transmission random access occasions, and the UE operation for a fourth, time-period-based, implementation of the improved small-data transmission procedure, in a scenario where the small data is transmitted using a periodic resource occasion during the time period, and
- **Fig. 31**: is a flow diagram for the UE behavior, according to another implementation of the improved small-data transmission procedure, where the UE determines an SBB-specific signal quality threshold against which the SSB quality is compared.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

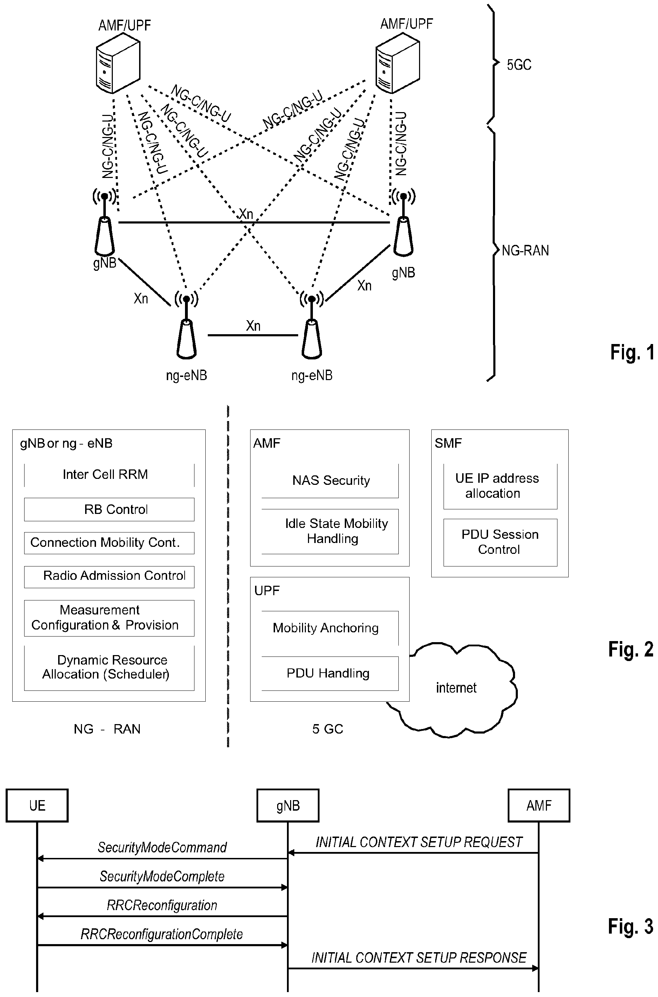

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.6.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300). RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

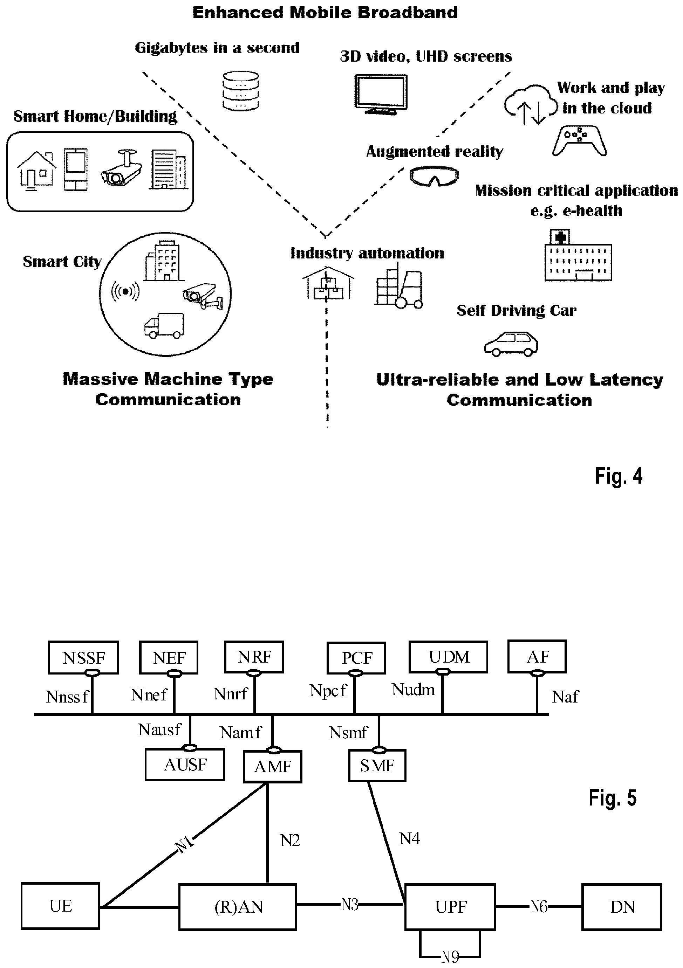

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g. 3GPP TS 23.501 v16.7.0 or v17.1.1, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within 5G NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, v16.6.0 section 9.2.6), including the following. The random access procedure is triggered by a number of events:
- Initial access from RRC_IDLE;
- RRC Connection Re-establishment procedure;
- DL or UL data arrival during RRC_CONNECTED when UL synchronisation status is "non-synchronised";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery;
- Consistent UL LBT failure on SpCell.

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access procedure is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access procedure in order to achieve uplink time-synchronization in the target cell.

There can be at least two types of random access procedures, allowing access to be either contention based (i.e. implying an inherent risk of collision), or contention free (non-contention based). An exemplary definition of a random access procedure can be found in 3GPP TS 38.321, v16.5.0 section 5.1.

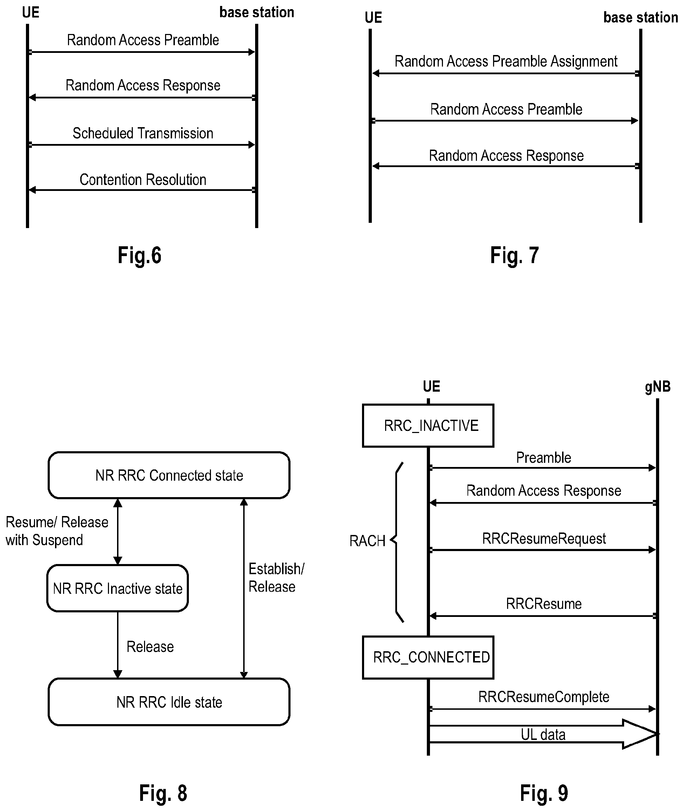

The RACH procedure will be described in the following in more detail, with reference to **Fig. 6 and 7****.** In the following, the contention-based random access procedure is being described in more detail with respect to **Fig. 6****.** This procedure consists of four "steps" and thus can be termed for example a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipments transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, because the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure (i.e. multiple user equipments sent the same preamble on the same PRACH resource), the colliding user equipments will receive the same T-CRNTI within the random access response and will also collide in the same uplink resources when transmitting their scheduled transmission in the third step of the RACH procedure. In case the scheduled transmission from one user equipment is successfully decoded by the base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 7** illustrates the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

Generally, for RACH preambles, see for example, 3GPP TS 38.211 V16.6.0, "Table 6.3.3.2-2: Random access configurations for FR1 and paired spectrum/supplementary uplink" and section 6.3.3.2, "Mapping to physical resources".

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine is extended with an inactive state (see e.g. TS 38.331 v16.3.1, Figures 4.2.1-1 and 4.2.1-2), as explained in the following.

The RRC in NR 5G (see TS 38.331, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 8****:**
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are defined in section 4.2.1 of TS 38.331, wherein the RRC_INACTIVE state is defined as
**"RRC_INACTIVE:**
- A UE specific DRX may be configured by upper layers or by RRC layer;
- UE controlled mobility based on network configuration;
- The UE stores the UE Inactive AS context;
- A RAN-based notification area is configured by RRC layer;
The UE:
- Monitors Short Messages transmitted with P-RNTI over DCI (see clause 6.5);
- Monitors a Paging channel for CN paging using 5G-S-TMSI and RAN paging using fullI-RNTI;
- Performs neighbouring cell measurements and cell (re-)selection;
- Performs RAN-based notification area updates periodically and when moving outside the configured RAN-based notification area;
- Acquires system information and can send SI request (if configured);
- Performs logging of available measurements together with location and time for logged measurement configured DEs;
- Performs idle/inactive measurements for idle/inactive measurement configured UEs.
"

According to the characteristics of the RRC Inactive state, for the Inactive UE the connection (both for user plane and control plane) is maintained with RAN and the core network.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH). The PSS and SSS can be used by UEs to find, synchronize to and identify a network. The PBCH carries a minimum amount of system information including an indication where the remaining broadcast system information is transmitted. In LTE, these three signals were also used, the PSS, SSS, and PBCH, although not as being part of one SSB.

The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window. For initial cell selection, the UE may assume a default SS burst set periodicity of 20 ms.

The 5G NR PSS is a Physical Layer specific signal to identify the radio frame boundary and is a type of an m-sequence. The 5G NR SSS is also a Physical-Layer specific signal to identify the subframe boundary and is also an m-sequence (see e.g. TS 38.211 v16.6.0 sections 7.4.2 and 7.4.3).

### Configured grant, grant free access, grant free uplink

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station.

In LTE, semi-persistent-scheduling (SPS) functionality was introduced, being particularly useful for periodic data transmissions such as Voice over IP (VoIP) services. A base station configures the SPS radio resources, and the UE can use these periodic radio resources, without an additional scheduling request procedure. However, the LTE SPS configuration is dedicated to a single device. If the device does not need the allocated periodic resources (e.g. data is only transmitted for specific events, such as a collision warning), the SPS resources that are no used by the UE are wasted.

In 5G NR, grant-free access, which is also known as transmission without grant (TWG), has been introduced, where the UE is also allowed to send data without prior scheduling (e.g. without the UE sending a corresponding resource request). Again, this approach may allow for minimizing latency and the respective signaling.

In addition, multiple devices (UEs) may be allowed to share periodic radio resources, called a configured grant (CG) (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data, see later sections). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16, namely Type 1 and Type 2 (see 3GPP 38.300 v16.6.0: "NR; NR and NG-RAN Overall Description; Stage 2 (Release 16)", section 10.3).

According to this exemplary implementation of TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called *ConfiguredGrantConfig.* (see TS 38.331 v16.5.0, section 6.3.2 *"Radio resource control information elements").*

A resource configuration for a CG may for instance comprise physical resources in a time domain and/or frequency domain, and/or reference signal (RS) parameters. The configuration parameter may further include a modulation and coding scheme (MCS) and/or a number of repetitions and/or a cycle period and/or a transport block size.

### Small-data transmissions

The characteristics of the small-data transmissions that are targeted in this disclosure refer to any service with the characteristics that data bursts in UL/DL are small and optionally rather infrequent with no strict requirements on delay. For instance, a single data transmission that it so small that it can be sent by the UE in one transmission (e.g. in RACH or one CG occasion, see below) can be considered a small-data transmission. Typical non-limiting examples of traffic characteristics for small-data transmissions are captured in the following table (see TR 25.705 v13.0.0 section 5).

### Characteristics of the small-data transmissions

| **Traffic parameter** | **Value** |
|---|---|
| application packet size | 100 bytes (UL); 100 bytes (DL) |
| latency¹ | 5s to 30min; 1hour for no mobility (static, pedestrian) |
| frequency | every minute and up to monthly |
| NOTE 1: latency is the duration from when the packet arrives at the buffer until it is completely transmitted (delay tolerance of the application). | |

Another different possible exemplary definition can depend on the configuration of the gNB. For instance, the gNB can define that data below a certain threshold (e.g. 1000 kbyte) can be considered small data, whereas data above that threshold is not to be considered small data. This threshold could e.g. be defined in connection with the buffer status of the UE.

Alternatively, a definition of what small-data is could also be fixed by a suitable 3GPP standard, e.g. providing a similar data amount threshold as described above.

### Small-data transmission by UE in RRC Inactive state

In more detail, 5G NR supports the RRC_INACTIVE state, and UEs with infrequent (periodic and/or non-periodic) data transmission are generally maintained by the network in the RRC_INACTIVE state. Until Rel-16, the RRC_INACTIVE state does not support data transmissions. Hence, the UE has to resume the connection (e.g. move to RRC_CONNECTED state) for any DL (MobileTerminated) and UL (MobileOriginated) data. Connection setup (or resume) and subsequently release to RRC_INACTIVE state would have to happen for each data transmission, however small and infrequent the data packets are. This results in unnecessary power consumption and signalling overhead.

Moreover, document 3GPP RP-193252 is 3GPP Work Item Description regarding NR Small Data, and provides the following specific examples of small and infrequent data traffic, in the sense of small data, include the following use cases:
- Smartphone applications:
   ∘ Traffic from Instant Messaging services (whatsapp, QQ, wechat etc.)
   ∘ Heart-beat/keep-alive traffic from IM/email clients and other apps
   ∘ Push notifications from various applications
- Non-smartphone applications:
   ∘ Traffic from wearables (periodic positioning information etc.)
   ∘ sensors (Industrial Wireless Sensor Networks transmitting temperature, pressure readings periodically or in an event triggered manner etc.)
   ∘ smart meters and smart meter networks sending periodic meter readings

Small-data transmissions can support various different packet sizes and can have different traffic requirements.

For example, for a Heart-beat traffic/keep alive traffic the packet size is around 50 bytes ~ 100 bytes. Furthermore, a heart-beat message arrives every 5 minutes or in the order of seconds. For smart meter that send periodic meter readings, the packet size is around 12 ~100 bytes for regular transmission. For a sensor that sends periodic traffic or event trigger traffic (aperiodic traffic), the packet size is around 8 bytes-128 bytes. The instant message (traffic pattern is not deterministic) can deliver text, photo, video etc., and the packet size varies from 100 bytes to 1000 bytes. For a push notification, the traffic pattern is not deterministic, and different applications generate very diverse message sizes.

An exemplary procedure of the prior art (in this case a 5G-NR-compliant prior art solution) to enable a UE in the RRC Inactive state, after transition to the RRC Connected state, to transmit (small) data will be briefly explained in the following with reference to Fig. 9. As apparent from the figure, the UE is assumed to be in RRC_Inactive state, which may e.g. involve that the UE (and gNB) has all data radio bearers suspended, and that no data can be transmitted to the gNB. In order to enable the UE to transmit data, the UE has to be first transitioned into the RRC Connected state, which can be done e.g. by the UE requesting to resume the RRC connection (here transmitting *RRCResumeRequest)* as part of the RACH procedure (in Fig. 9, e.g. using the 4-step RACH procedure).

In detail, the UE may transmit the preamble to the current gNB, then receives a corresponding random access response with a (small) grant of UL radio resources, which are used by the UE to transmit the RRCResumeRequest message as msg3 of the RACH procedure.

Finally, the new gNB provides the RRCResume message to the UE, which in turn then transitions to the RRC Connected state, including the resumption of all data radio bearers. In RRC_Connected state, the UE is then able to transmit the UL (small)data.

It is not yet defined how and when the gNB decides that a UE should indeed by transitioned to RRC_CONNECTED state. The control in said respect is likely to still rest with the gNB, although the UE might request to resume the RRC connection. One exemplary possibility is that the gNB takes into account the buffer status report, that the UE could transmit e.g. in the Msg3 or MsgA, to decide whether the UE should transition to the RRC_CONNECTED state or not. The buffer status report indicates the actual amount of data in the UE buffer. For instance, if the buffer status report indicates a large amount of data in the UE buffer, the gNB might decide to transition the UE from RRC_INACTIVE to RRC_CONNECTED state (e.g. by gNB sending *RRCResume* message). On the other hand, if the buffer status report indicates only little amount of data in the UE buffer, the gNB might decide to keep the UE in the RRC_INACTIVE state (e.g. by gNB sending RRCRelease message). Furthermore, also the absence of the buffer status report in the Msg3/MsgA may provide an indication to the gNB, e.g. that no further data is available in the UE buffer, concluding that the UE can stay in RRC_INACTIVE.

As can be appreciated from the description of Fig. 9, the above process, according to which the UE first needs to transition from the inactive state to the connected state such that the UE can send any user data in the uplink, introduces latency and consumes significant UE power for each transmission of user data. Moreover, the signalling overhead caused for INACTIVE-state UEs when transmitting small data packets is a general problem and will even be exacerbated with more UEs being handled simultaneously in 5G NR.

Therefore, 3GPP is intending to enable the RRC_Inactive UE to transmit small data in the uplink without changing the UE state to RRC Connected. In general, any device that has intermittent small data packets, when in the INACTIVE state, will benefit from enabling small data transmissions in the INACTIVE state.

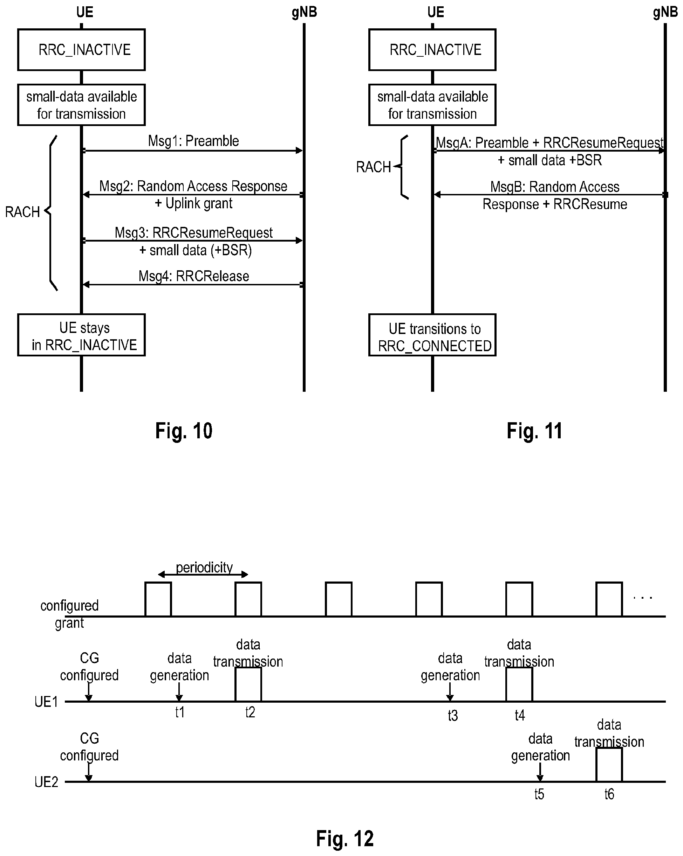

It was agreed in 3GPP to enable small data transmissions (SDT) by using a 4-step RACH or a 2-step RACH (see above e.g. Fig. 6, 7), or a configured-grant (CG) procedure (see above section *"Configured grant, grant free access, grant free uplink"*). Furthermore, the RACH procedure can be specifically configured to be usable for small-data transmissions, i.e. a small-data-specific RACH procedure. However, a normal (legacy) RACH procedure (be it 4-step or 2-step) can be used alternatively to carry the small data, e.g. in Msg 3 or MsgA (see Fig. 10 and 11), i.e. non-small-data-specific RACH procedure.

The UE can be configured to use a small-data-specific RACH procedure, which could be defined as using resources different from the general-purpose legacy RACH procedure. For instance, the preambles could be different, or the random access occasion (i.e. in time and/or frequency) can be different.

For instance, both 2-step RACH or 4-step RACH are applicable for RACH based uplink SDT (Small-Data Transmission) in RRC_INACTIVE. In case of 4 step RACH based SDT, uplink data is transmitted in Msg3. Based on the received RACH preamble, gNB identifies that random access is initiated by the UE for small-data transmission and allocates appropriate UL grant size in RAR (in Msg2). In case of 2-step RACH based SDT, uplink data is transmitted in MsgA. Based on the received RACH preamble, gNB identifies that RA is initiated by a UE for small-data transmission and allocates appropriate UL grant size in a fallbackRAR. Additionally, based on the received RACH preamble, the gNB identifies the appropriate PUSCH resource to decode. In order for the network to identify that random access is for a small-data transmission, the combination 'PRACH occasion + Preamble' used for random access initiated for small data transmission can be different than those used for a random access, initiated for other purposes.

The small-data-specific RACH procedure has typically a smaller collision risk than the legacy, general-purpose, RACH procedure, because the resources specifically configured for the small-data-specific RACH are only used for transmitting small data, while the normal legacy RACH procedure is used by many more UEs for different reasons. Thus, if the UE is configured to use the small-data-specific RACH procedure, the UE shall use same rather than the legacy RACH procedure for transmitting small data.

Depending on the application types in the UE, the UEs can have different traffic requirements and correspondingly different packet sizes. The gNB can determine the resources to be allocated to the UE based on the configured grant (e.g. Type 1). The gNB can perform the determination e.g. based on one or more of subscription information, a traffic pattern and other type of UE assistance information.

Further exemplary implementations can involve for instance the following details regarding the configured grant.

The configuration of configured grant resources can be provided by the network when the UE is in RRC_CONNECTED, so that the UE can use the configured grant resources when the UE moves to the RRC_INACTIVE. The configuration of configured resources for UE small-data transfer is decided by the network in various scenarios, including for instance.
- UE assistance information, provided by UE indicating the traffic pattern
- Network assessment information, including any traffic statistics stored by the gNB itself, e.g. as part of the UE context in the case of RRC_INACTIVE
- UE request message. UE could send the configured grant request message for future small data transfer when the UE is in RRC_CONNECTED.

Based on the different cases mentioned above, the network decides whether to configure the UE with configured grant resources for small-data transfer. The configured grant resource configuration is provided to the UE in the following exemplary scenarios.
- When the UE is in RRC_CONNECTED, based on a UE request message or UE assistance information; the configuration of configured grant resource can be contained in the RRC release message with suspendConfig when UE moving from RRC_CONNECTED to RRC_INACTIVE.
- For RACH-based small-data transmission, the configured grant resources can be contained in RRC release message included in MsgB or Msg4 for the RACH-successful user in response to the UE assistance information.

One possibility for a UE to transmit small data in the uplink when still in RRC_INACTIVE state is to use the RACH procedure, as mentioned above. The following assumptions, made for Fig. 10 and 11 and also for subsequently describing some concepts, solutions and variants of the invention, are to be considered only as exemplary.

When assuming a RACH-based small-data uplink transmission as an example, the UE can use either the 2-step RACH or 4-step RACH to send small data in the uplink (see MsgA or Msg3), and simplified and exemplary RACH-based small-data uplink transmission procedures are illustrated in Fig. 10 and 11. In both Fig. 10 and 11 it is exemplarily assumed that the UE is already in RRC_INACTIVE state and has small-data available for transmission. **Fig. 10** assumes a 4-step RACH procedure and illustrates how the UE transmits the small data with the Msg3. **Fig. 11** assumes a 2-step RACH procedure and illustrates how the UE transmits the small data with the MsgA.

According to one example, the control message and the small data are transmitted together to the base station, e.g. together in the same transport block, where the UE builds the transport block using the resources and multiplexes data and signaling together in the same transport block of the MAC layer. For the 4-step RACH case, the small data is transmitted in the Msg3, based e.g. on the radio resources granted through the uplink grant received from the gNB in the Msg2. For the 2-step RACH case, the small data is transmitted in the MsgA, e.g. using radio resources that are selected by the UE from some previously-configured radio resources, e.g. in connection with the selected RACH preamble.

Moreover, Fig. 10 and 11 illustrate that the buffer status report can be included in the Msg3 respectively MsgA, although the BSR is only illustrated within parentheses to reflect that including the BSR is merely an exemplary possibility. For instance, in Fig. 10 it is exemplarily assumed that the gNB decides to keep the UE in RRC_Inactive state, e.g. because the BSR is either absent or indicates only a little and of uplink small data in the UE buffer. Correspondingly, an RRCRelease message is transmitted for the Msg4. On the other hand, in Fig. 11 it is exemplarily assumed that the gNB decides to transition the UE to the RRC_Connected state, e.g. because the BSR indicates a significant amount of uplink data in the UE buffer that has to be transmitted by the UE. Correspondingly, an RRCResume message is transmitted for the MsgA. Moreover, although in Fig. 10 the uplink grant is illustrated separately from the Random Access Response of Msg2, the uplink grant may equally be considered as belonging to and being part of the Random Access Response.

In summary, a possible exemplary implementation of a small-data uplink transmission for RRC_INACTIVE UEs is possible and could be e.g. based on such a RACH procedure, be it a 2-step or 4-step RACH procedure (see Fig. 10 and 11). Fig. 10 and 11 apply to both a small-data-specific RACH procedure and a normal legacy RACH procedure.

**Fig. 12** illustrates in an exemplary manner a configured-grant-based small-data transmission for two UEs, UE1 and UE2, both exemplary in the inactive state. The periodic CG-allocated radio resources are illustrated in the top row of Fig. 12 and have a specific periodicity. For instance, a heart-beat message may become available for transmission at the UE1 every 5 minutes, while the traffic generation for a sensor has a traffic periodicity of every 1hr.

The same CG resources are shared between UE1 and UE2 and are thus available for an uplink transmission at the UE1 and UE2. It is assumed that at time t1, small data becomes available for transmission at the UE1. The next usable CG resource is at time t2, which the UE1 uses for performing the small-data transmission. Similarly, UE1 can use the radio resources allocated by the configured grant at t4 to transmit the small data generated at t3. It is exemplary assumed that at UE2 small data becomes available for transmission at time instance t5, and that UE2 uses the next-available CG occasion at t6 to transmit the small data.

### Further Improvements

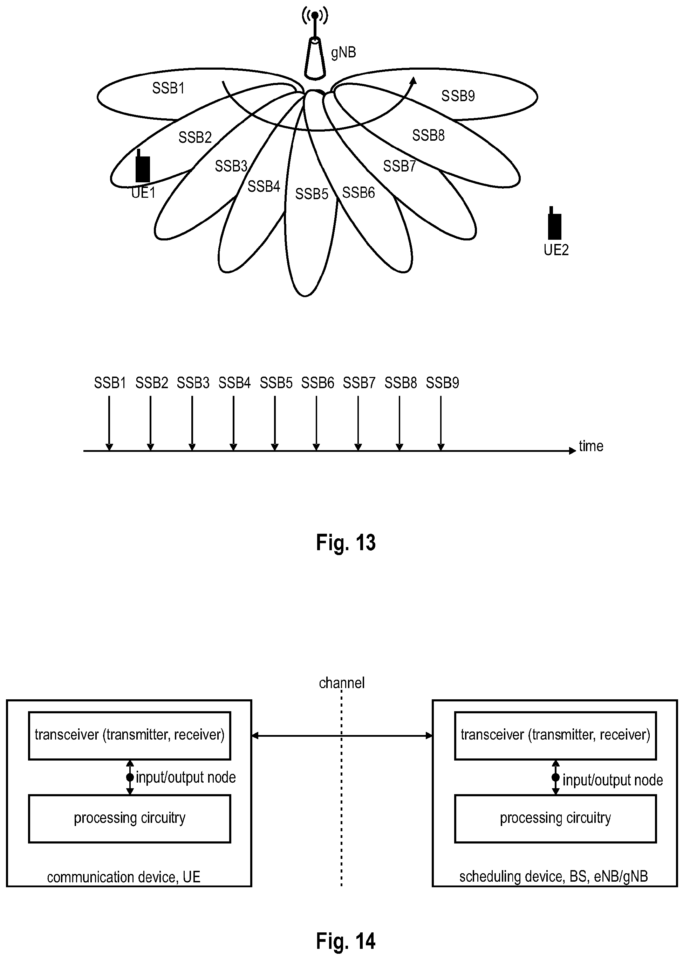

As a general and exemplary assumption, transmission by the gNB in 5G NR can be performed based on beams, where a SSB is transmitted via a specific beam radiated in a certain direction. Fig. 13 illustrates a simplified and exemplary beam-sweeping transmission by the gNB, with two UEs, UE1 and UE2.

For instance, beam sweeping can be implemented by changing the beam direction for each SSB transmission. In other words, there is a one-to-one relationship between a transmission beam (and direction) from the gNB and a SSB. Thus, multiple SSBs are transmitted within a certain time interval; one SSB per beam. Each SSB can be identified by a unique number, called SSB index.

Multiple UEs are located at different places and different distances from the gNB. The UE measures the signal strength of each SSB it detects within a certain time period. From the measurement result, the UE can identify the SSB (and its index) with the strongest signal strength. This SSB with the strongest signal strength is the best beam for the UE.

One of the developments discussed currently in 3GPP relate to the CG-based small-data transmissions, and particularly to the use of the SSB to improve same. For instance, it was agreed that an association between the configured grant resources and a signal synchronization block (SSB) is required for a CG-based small-data transmission. Furthermore, the associated SSB should have a signal quality above a threshold, i.e. should be good enough; the RSRP of the SSB can be used for instance as the parameter reflecting the signal quality. The requirement that only a good-enough SSB should be selected by the UE can apply to only the first CG-based small-data transmission, such that the signal quality requirement of the SSB need not be necessarily fulfilled for subsequent CG-based small-data transmissions. On the other hand, the requirement that only a good-enough SSB should be selected by the UE can apply not only to the first but to one or all of the subsequent CG-based small-data transmissions too.

One exemplary reason behind the above agreements is that the gNB does not know where a UE is located when in RRC_Inactive (or in RRC_Idle). To assist the gNB in determining in which direction the UE is located (e.g. which transmission beam the UE is receiving from the gNB), different CG resources can be defined for different SSBs. Then, since the UE uses CG resources for an uplink transmission that are unambiguously associated with a particular SSB, the gNB can determine the SSB, from the CG resources used by the UE, and thus the transmission beam and direction.

Moreover, the SSB is used among other things to synchronize the transmission timing between the UE and the gNB. By requiring that the SSB has a good quality (e.g. above a threshold), the reliability of the uplink small-data transmission is increased.

As a result of the above agreements, however, when the UE determines that there is no SSB that fulfills the SSB signal quality requirement (e.g. no SSB is above SSB signal quality threshold), the UE cannot use the configured-grant resources to transmit the small data. As a result, the small data might eventually have to be dropped and is thus lost.

Exemplary, as exemplarily assumed for Fig. 13, UE1 would determine SSB2 as having the strongest SSB and could use CG resources associated with the SSB2 beam for transmitting the available small data. On the other hand, UE2 might detect SSB7 and SSB8, but the signal strength of both SSB7 and SSB8 might not be good enough, such that UE2 would not be able to transmit the available small data using any configured-grant resources.

The inventors have identified the above-discussed potential drawbacks and challenges and have thus identified the possibility of providing an improved small-data transmission procedure that allows avoiding or mitigating one or more of the above-identified problems. The present invention relates to different solutions and variants for such an improved small-data transmission procedure.

### Embodiments

In the following, UEs, base stations, and respective procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The term **"small data"** used in the application is to be broadly understood ê.g. as data that the UE and the base station agree on being small, e.g. versus non-small. For instance, whether data is to be considered small-data or not, can e.g. be defined by a base station by setting a data amount threshold. Alternatively, what constitutes small-data can be defined by a telecom standard, e.g. by setting a data amount threshold. As further examples, possible definitions of what is small data can be found above in the corresponding small-data section.

The term **"inactive state"** used in the application is to be broadly understood as a state in which regular and extensive data exchange between the UE and the base station is not possible or not common. For instance, the UE, when in inactive state, (e.g. called "inactive UE") may not have actively-used data connections, but still has one or more inactive data connections (e.g. could also be called existent but not currently-used) that allow a (small) data transmission without the need to resume the data connection first. For sake of completion, the UE in **the idle state** does not have data connections over which the UE could transmit data to the base station, while the UE in **connected state** has one or more active data connections that can be immediately used to carry data to the base station.

The term **"periodic radio resources"** used in the application is to be broadly understood as referring to radio resources (e.g. in the time and/or frequency domain) that occur periodically in time. These *"periodic radio resources"* can be allocated to a UE (or more UEs) in advance by the corresponding serving base station (serving the UE) and are thus already configured and usable by the UE to transmit data, without the need that the UE first has to request radio resources when (small) data becomes available for transmission. In one example, the "periodic radio resources" are those of a configured grant, as described above for the 5G implementation, e.g. a configured grant of type 1.

The expression **"synchronization signal block"** used in the application is to be broadly understood as referring to a transmission of one or more synchronization signals and can be abbreviated SSB. In one example, the expression refers to the SSB similar or the same as described above for the 5G implementation, e.g. including the PSS, SSS, and PCH. The **"signal quality"** of the synchronization signal block for instance refers to a signal quality of one or more synchronization signals within the synchronization signal block. The expression **"signal quality above the signal quality threshold"** that is determined by the UE is to be understood as determining whether a synchronization signal block has a suitable quality, e.g. a good enough quality. To said end, a signal quality threshold is defined, and each detected synchronization signal block is compared against this threshold. Alternative solutions also cover the determination of whether a synchronization signal block has a quality equal to or more than the signal quality threshold.

The expression **"time trigger control mechanism"** used in the application is to be broadly understood as a mechanism for controlling when to trigger a particular action, such as performing the alternative small-data transmission mechanism, but also the action of still trying to perform the periodic-resource-based transmission of the small data to avoid the alternative transmission of the small data .

The expression **"alternative small-data transmission mechanism"** used in the application is to be broadly understood as a transmission mechanism for transmitting the available small data, which is alternative to the initially-intended small-data transmission mechanism, here the periodic-resource-based small-data transmission where previously configured periodic radio resources are usable by the UE without sending a prior scheduling request.

The application distinguishes between a periodic-resource-based small-data transmission (e.g. the above-introduced CG-based SDT) and a random-access-based small-data transmission (e.g. the above-introduced RA-based SDT).

For the following solutions it is exemplarily assumed that the improved small-data transmission procedure is conceptually based on the small-data transmissions already defined according to 3GPP 4G or 5G standards.

**Fig. 14** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of an improved small-data transmission procedure will be described in the following. In said connection, improved UEs and improved base stations are presented, which participate in the improved small-data-transmission procedures. Corresponding methods for the UE behavior and the base station behavior are provided as well.

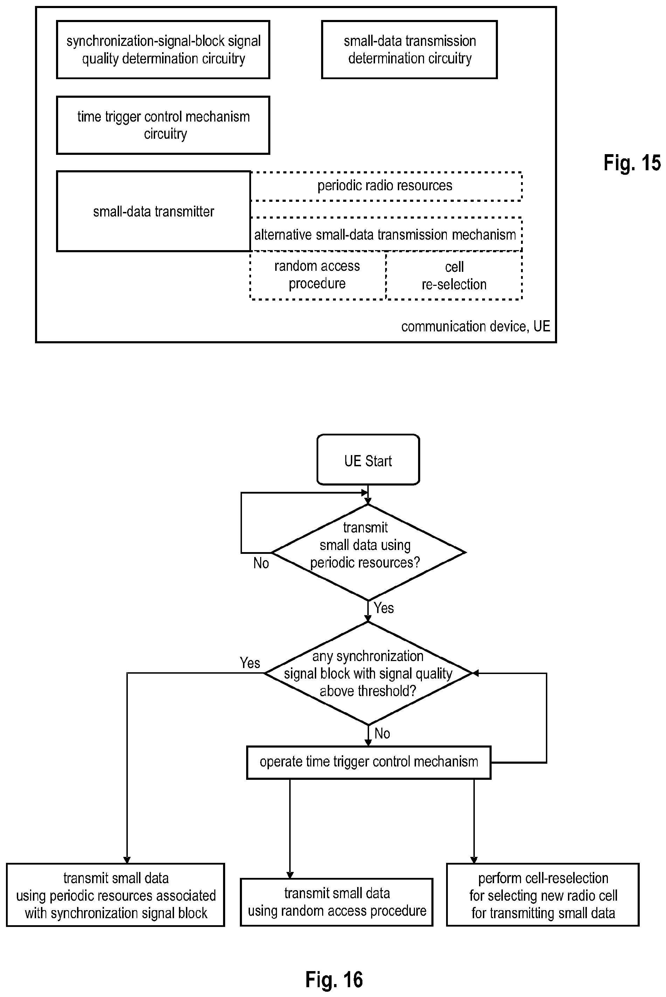

**Fig. 15** illustrates a simplified and exemplary UE structure according to an exemplary implementation of the improved small-data transmission procedure, which can be implemented based on the general UE structure explained in connection with Fig. 14. The various structural elements of the UE illustrated in said Fig. 15 can be interconnected between one another e.g. with corresponding input/output nodes (not shown) e.g. in order to exchange control and user data and other signals. Although not shown for illustration purposes, the UE may include further structural elements.

As apparent from Fig. 15, the UE may include a synchronization-signal-block signal quality determination circuitry, a small-data transmission determination circuitry, a time trigger control mechanism circuitry and a small-data transmitter, wherein the small-data transmitter can use e.g. periodic radio resources or an alternative small-data transmission mechanism such as a random access procedure or a cell re-selection procedure.

In the present case as will become apparent from the below disclosure, the receiver of the UE can thus be exemplarily configured to at least partly perform one or more of receiving configuration information from the base station, for configuring the periodic-resource-based small-data transmission, or for configuring the time trigger control mechanism, etc.

In the present case as will become apparent from the below disclosure, the processing circuitry of the UE can thus be exemplarily configured to at least partly perform one or more of determining that small data became available for transmission using periodic resources, determine a synchronization signal block having a signal quality above a threshold, operating a time trigger control mechanism, controlling the UE to perform an alternative small-data transmission mechanism, operating a timer, operating a counter, determining whether there are one or more periodic resource occasions during a time period, etc.

In the present case as will become apparent from the below disclosure, the transmitter of the UE can thus be exemplarily configured to at least partly perform one or more of transmitting the small data, using the periodic resources or as part of a random access procedure etc.

One exemplary procedure as will be disclosed in more detail further below is implemented by a UE that includes the following. A processor of the UE determines that small data has become available for transmission. The available small data is to be transmitted using periodic resources without a prior scheduling request from the UE. Transmitting the available small data using the periodic resources includes that the processor determines one of a plurality of synchronization signal blocks having a signal quality above a signal quality threshold. In case the processor determines there is no synchronization signal block having the signal quality above the signal quality threshold:
- the processor, when in operation, operates a time trigger control mechanism, and
- the processor, when in operation, controls the UE to perform an alternative small-data transmission mechanism, instead of transmitting the available small data using the periodic resources, according to the operated time trigger control mechanism.

The alternative small-data transmission mechanism includes one of:
- transmitting, by a transmitter of the UE, the available small data using a random access procedure, and
- performing by the UE a cell-reselection procedure for selecting a new radio cell in which to transmit the available small data.

A corresponding exemplary method comprises the following steps performed by a UE:
determining that small data has become available for transmission, wherein the available small data is to be transmitted using periodic resources without a prior scheduling request from the UE,
wherein transmitting the available small data using the periodic resources includes the step of determining one of a plurality of synchronization signal blocks having a signal quality above a signal quality threshold,
in case of determining there is no synchronization signal block having the signal quality above the signal quality threshold:
   - operating a time trigger control mechanism, and
   - controlling the UE to perform an alternative small-data transmission mechanism, instead of transmitting the available small data using the periodic resources, according to the operated time trigger control mechanism,
wherein the alternative small-data transmission mechanism includes one of:
   - transmitting the available small data using a random access procedure, and
   - performing by the UE a cell-reselection procedure for selecting a new radio cell in which to transmit the available small data.

A corresponding sequence diagram for an exemplary UE behaviour in line with the above-discussed UE and UE method is illustrated in **Fig. 16****.** As apparent therefrom, the UE behaviour includes the determination as to whether there is any synchronization signal block with a signal quality above a threshold. In the positive case, this requirement for a periodic-resource-based small-data transmission is fulfilled, and the UE can proceed to transmit the small data using the periodic resources associated with that synchronization signal block.

This for instance can involve that the UE determines the periodic resources that are associated with that synchronization signal block that has a signal quality above the threshold; if there are more than one synchronization signal block having a good-enough signal quality, the UE may select any one of them, e.g. the one synchronization signal block having the best signal quality. The UE can then use those periodic resources associated with the selected synchronization signal block to transmit the small data, e.g. at a particular periodic resource occasion thereof.

On the other hand, if no such synchronization signal block currently exists with a sufficiently good signal quality, the UE proceeds differently. In particular, the UE operates the time trigger control mechanism to determine whether and if so when to transmit the small data using an alternative transmission mechanism. For instance, the time trigger control mechanism can be operated to allow the UE to perform if possible, for some time period and/or for a number of times, further attempts at transmitting the small data using the periodic resources as initially intended. As apparent from Fig. 16, this might again involve the determination as to whether there is now a synchronization signal block with a sufficiently good signal quality, and if so, the periodic-resource-based small-data transmission.

On the other hand, eventually the time trigger control mechanism is operated to perform an alternative transmission of the small data, not using the periodic resources. This could encompass e.g. the transmission of the small data using a random access procedure or performing a cell re-selection procedure such that the UE tries to send the available small data in a new radio cell. Therefore, the small-data transmission can be achieved even if the periodic-resource-based small-data transmission is not possible for some time (e.g. due to not finding a good-enough synchronization signal block).

The trigger for such an alternate transmission can be implemented in several different ways, such as a timer, a counter, a combination of a timer and counter, a simple and single determination at the beginning, as will be explained in more detail below (see 1^{st} to 4^{th} implementations of the time trigger control mechanism).

The time trigger control mechanism thus allows to delay the use of the alternative small-data transmission mechanism to still be able transmit the small data, thereby prioritizing the transmission of the small data using the periodic resources as initially intended and configured. Put differently, the time trigger control mechanism allows to avoid the alternative small-data transmission mechanism to some extent.

To said end, the time trigger control mechanism can be performed based on a parameter, where different values of the parameter result in a different delay until using the alternative small-data transmission mechanism, during which the UE attempts to perform the initially intended periodic-resource-based small-data transmission.

The use of an alternative small-data transmission mechanism instead of the periodic-resource-based small-data transmission has the advantage of being able to perform the small-data transmission at all, which is important for scenarios where the initially-intended periodic-resource-based small-data transmission is not possible at all or heavily delayed, e.g. due to the requirement that a periodic-resource-based small-data transmission is possible only with a synchronization signal block of a good-enough quality (e.g. having a signal quality above a signal quality threshold).

On the other hand, there are some reasons to avoid performing the alternative small-data transmission mechanism, as will be explained in the following. The periodic-resource-based small-data transmission is specifically configured by the base station to enable the UE to transmit small data, such that the configured periodic radio resources can be specifically tailored for the small-data transmission and possibly can be dedicated to a UE, e.g. not shared with one or more UEs. Therefore, collisions with other UEs are less likely.

The radio resources of a random access procedure are shared between many UEs and are not necessarily tailored to a small data transmission. Although the UE could be configured with a small-data-specific random access procedure, there is still a likelihood of a collision with another UE. Moreover, the UE might have to use a non-small-data-specific random access procedure (e.g. when UE is not configured to use such a small-data-specific random access procedure), which is not specific to small data and is used by many UEs for many goals (different from transmitting small data). Thus, a collision and interference with other UEs is even more likely. The unsuccessful transmission of small data using such a random access procedure increases the signaling overhead and increases the power consumption.

Overall, the likelihood for a successful small-data transmission using a random access procedure is typically far less than for a periodic-resource-based small-data transmission.

Moreover, performing a cell re-selection (and the subsequent small-data transmission in the new radio cell) also has disadvantages, for instance that a significant delay is introduced until the re-selection is finished and the new small-data transmission can be attempted, and that it is not ensured that the small-data transmission in the new radio cell succeeds immediately. Furthermore, the cell re-selection also increases the power consumption. Thus, also the cell re-selection can involve a significant increase in signaling overhead and power consumption, that is best avoided if possible.

Therefore, the improved small data transmission procedure, as generally explained above and as described below according to the many different implementation and respective variants, allows to configure a trade-off between attempting the advantageous periodic-resource-based small-data transmission and ensuring that the small data is transmitted using another alternative mechanism that in turn has disadvantageous of its own.

Some exemplary implementations of the improved small data transmission procedure also involve the base station, to which the UE is currently connected (termed e.g. serving base station). Correspondingly, the improved small data transmission procedure also provides an improved base station that participates therein. The base station could include the following. A transmitter of the base station transmits a configuration message to a user equipment, UE, for configuring the UE to transmit small data, which has become available for transmission, by using periodic resources without a prior scheduling request. The transmitter transmits one or more synchronization signal blocks. A processor of the base station determines one or more parameters for a time trigger control mechanism, which is operated by the UE in case the UE determines there is no synchronization signal block having a signal quality above a signal quality threshold and which is operated by the UE for controlling to perform an alternative small-data transmission mechanism, instead of transmitting the available small data using the periodic resources. The transmitter transmits the one or more parameters to the UE. A receiver of the base station receives the available small data via the periodic resources or via the alternative small-data transmission mechanism. The alternative small-data transmission mechanism includes one of transmitting by the UE the available small data using a random access procedure, and of performing by the UE a cell-reselection procedure for selecting a new radio cell in which to transmit the available small data.

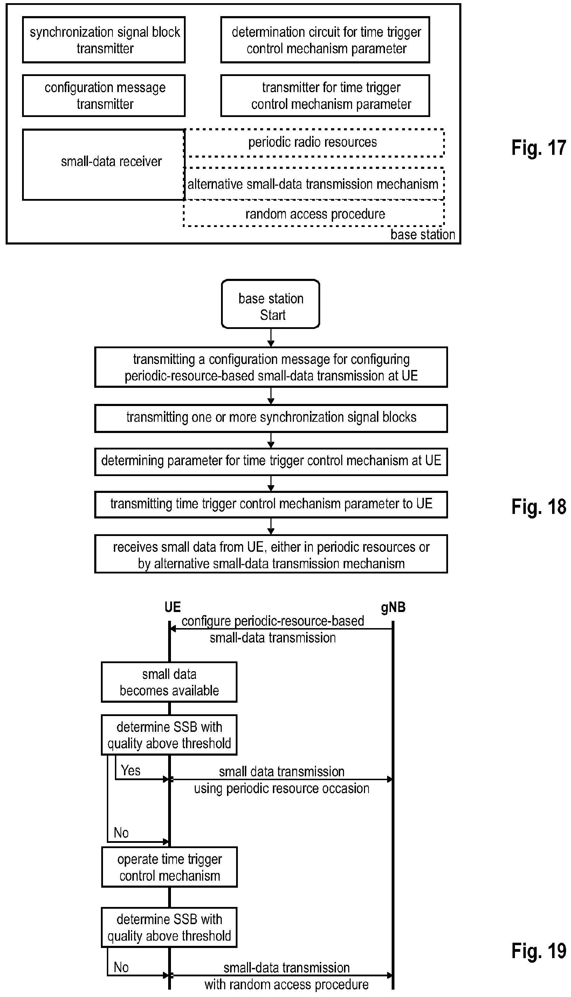

**Fig. 17** illustrates a simplified and exemplary base station structure according to an exemplary implementation of the improved small-data transmission procedure, and which can be implemented based on the general base station structure explained in connection with Fig. 14. The various structural elements of the base station illustrated in said Fig. 17 can be interconnected between one another e.g. with corresponding input/output nodes (not shown) e.g. in order to exchange control and user data and other signals. Although not shown for illustration purposes, the base station may include further structural elements.

As apparent therefrom, the base station comprises a synchronization signal block transmitter, a configuration message transmitter, a determination circuit for determining a time trigger control mechanism parameter, a transmitter for transmitting a time trigger control mechanism parameter, and a small data receiver capable of receiving small data using periodic radio resources or an alternative small-data transmission mechanism such as a random access procedure.

A corresponding method comprises the following steps performed by the base station:
transmitting a configuration message to a user equipment, UE, for configuring the UE to transmit small data, which has become available for transmission, by using periodic resources without a prior scheduling request,
transmitting one or more synchronization signal blocks,
determining one or more parameters for a time trigger control mechanism, which is operated by the UE in case the UE determines there is no synchronization signal block having a signal quality above a signal quality threshold and which is operated by the UE for controlling to perform an alternative small-data transmission mechanism, instead of transmitting the available small data using the periodic resources,
transmitting the one or more parameters to the UE,
receiving the available small data via the periodic resources or via the alternative small-data transmission mechanism,
wherein the alternative small-data transmission mechanism includes one of:
   - transmitting by the UE the available small data using a random access procedure, and
   - performing by the UE a cell-reselection procedure for selecting a new radio cell in which to transmit the available small data.

A corresponding sequence diagram for an exemplary base station behavior in line with the above-discussed base station is illustrated in **Fig. 18****.** The sequence diagram illustrates an exemplary and simplified implementation of the above presented base station method.

As already discussed above for the UE, the improved small data procedure allows that the small-data transmission can be achieved even if the periodic-resource-based small-data transmission is not possible for some time (e.g. due to the UE not finding a good-enough synchronization signal block). The improved base station allows for optimizing the time trigger control mechanism particularly determining the parameter based on which this mechanism is operated by the UE. The base station can thus precisely configure the UE and how to prioritize the initially intended and configured periodic-resource-based small-data transmission over the alternative small-data transmission mechanism.

**Fig. 19** illustrates a simple and exemplary interaction between the improved UE and improved base station of the above discussed improved small-data transmission procedure. In this solution presented in Fig. 19 it is exemplarily assumed that the UE is configured to use the periodic-resource-based small data transmission, which could for instance include the configuration of the periodicity, time/frequency radio resources etc. On the other hand, it is exemplarily assumed that the base station does not provide configuration information with regard to the time trigger control mechanism. Rather, the UE determines the necessary parameters for operating the time trigger control mechanism on its own.

Fig. 19 illustrates in a very simplified manner that small data becomes available for transmission at the UE, and that the UE, in the context of transmitting the available small data using the configured periodic resources, determines whether any synchronization signal block (SSB) has a quality above a signal quality threshold. If yes, the small-data transmission is performed by the UE using a corresponding periodic resource occasion. On the other hand, if no such SSB is found by the UE, the UE operates the time trigger control mechanism and might eventually, e.g. after again failing to determine an SSB with good-enough quality, transmit the small data with an alternative small-data transmission mechanism such as a random access procedure.

In the above, an exemplary and general implementation of the improved small-data transmission procedure is explained, including a corresponding improved UE and improved base station. In the following, various implementations and variants of this improved small-data transmission procedure will be presented in detail.

In one exemplary implementation, the improved small-data procedure presented above or below can be performed by a UE that is in the RRC inactive state, e.g. as explained above in connection with the 5G NR standardization. In other exemplary implementations, however, the UE can also be in the RRC_Connected state or in the RRC_Idle state.

In the different implementations of the improved small-data transmission procedure explained above and below, it is exemplary assumed that the signal quality of the synchronization signal block is used for determining whether the requirement is fulfilled. However, it is also possible to determine the signal quality associated with such a synchronization signal block differently. Another possibility is to use instead (or in addition) the signal quality of a reference signal that is received over the same beam as the synchronization signal block, assuming that the signal quality of that reference signal and the signal quality of the synchronization signal block correspond to each other. Such a reference signal could be for instance, the Channel Status Information, CSI, reference signal, e.g. similar or the same as defined in 5G NR.

In the different implementations of the improved small-data transmission procedure explained above and below, the improved small-data transmission procedure is explained generally based on a synchronization signal block having a signal quality. According to one exemplary implementation, the synchronization signal block can include one or more synchronization signals, such as a Primary Synchronization Signal, PSS, and a Secondary Synchronization Signals, SSS, and optionally can also include a Physical Broadcast Channel, PBCH, e.g. the PSS, SSS, and/or PBCH being similar or the same as defined in 5G NR discussed above. In one exemplary implementation, the signal quality is determined based on one or more of the synchronization signals of the synchronization signal block. In addition, the signal quality can be implemented e.g. as one or more of a Reference Signal Received Power, RSRP, a Reference Signal Received Quality, RSRQ, and a Signal to Interference plus Noise Ratio, SINR.

In the different implementations of the improved small-data transmission procedure explained above and below, the improved small-data transmission procedure can involve performing a random access procedure as the alternative small-data transmission mechanism. According to exemplary implementations, the random access procedure can be implemented as a small-data-specific random access procedure configured by the base station for the UE to use in such situations. Alternatively, e.g. if not configured with such a small-data-specific random access procedure, the UE may use a non-small-data-specific random access procedure as the alternative small-data-transmission mechanism. The difference between the two types of random access procedures can be e.g., one or more of the radio resources and the preambles which the UE can respectively use.

In addition or independently, the random access procedure mentioned above can include two steps, in which case the transmission of the available small data is performed with a first message of the two-step random access procedure, or can include four steps, in which case the transmission of the available small data is performed with a third message of the four-step random access procedure.

For instance, a two-step or four-step RACH procedure, similar to as the same as defined for 5G NR, discussed above, can be used in an exemplary implementation. Corresponding examples for a 4-step respectively 2-step RACH-based small-data transmission are illustrated in Fig. 10 and 11 and described in relation to these figures.

The different implementations of the improved small-data transmission procedure explained above and below involve performing a cell re-selection as the alternative small-data transmission mechanism. Thus, the cell re-selection is performed by the UE so as to search for a better cell to camp on, if none of the present SSBs has a good-enough quality.

For instance, the cell re-selection can for instance include the following steps.

Step 1. First, the UE scans, one by one, different radio frequency, RF, channels, prioritized based on the information stored in the UE. If it manages to find a suitable cell on any of those RF channels, the cell is selected, and the procedure ends. If not, then UE continues with the initial cell selection process described in step 2.

Step 2. If no prioritized RF channel was found in step 1, the UE starts to scan all RF channels in all NR bands it supports. On each channel, the UE is only obliged to search for the strongest cell and verify whether it can be a suitable cell by reading SIB1 and checking the PLMNs (Public Land Mobile Networks) supported by the cell. If the identified cell is suitable, it is selected and the procedure ends. Otherwise, the UE chooses another RF channel to scan and repeats this step.

According to exemplary implementations, the cell re-selection of the improved small-data transmission procedure can be the same or similar to cell re-selection as currently standardized for 5G NR, e.g. as defined in 3GPP TS 38.304 v16.5.0 section 5.2.

According to an exemplary implementation of the improved small-data transmission procedure explained above and below, if the UE uses the cell re-selection procedure as the alternative small-data transmission mechanism, the timer trigger control can be operated differently, such that the cell re-selection is triggered immediately, i.e. without introducing any delay (e.g. based on timer and/or counter). This would have the benefit that the additional delay, caused by attempting a further periodic-resource-based small-data transmission, is not introduced.

In more detailed implementations, the configuration of whether or not the cell re-selection is triggered immediately can be associated with the configuration of the periodic resources. Put differently, depending on the configuration of the periodic resources, the UE either triggers the cell re-selection immediately, or operates the time trigger control differently to allow for a delay during which the UE can attempt the periodic-resource-based small-data transmission (e.g. using a timer and/or counter). The UE selects any one of the detected SSBs (all having an insufficient signal quality) and can thus determine the periodic resources associated with that selected SSB. Depending on said periodic resources, the UE has a further configuration regarding the triggering of the cell re-selection. In one example, the triggering configuration may depend on the periodicity of the periodic resources. If the periodicity is large (occasions are sparse), the cell re-selection could be triggered immediately, so as to avoid the relatively-long delays involved in awaiting the one or more periodic resource occasions. On the other hand, if the periodicity is short (occasions are dense), the cell-reselection could be triggered only after a delay during which the UE is able to attempt one or more periodic-resource-based small-data transmissions; the delay can e.g. be introduced by operating in the time trigger control mechanism as explained above and below.

In addition or alternatively, the gNB can decide how to configure the UE in said respect based on the periodicity of the CG resources. For instance, the gNB can determine for each SSB when to trigger the cell re-selection immediately and when not, respectively based on the periodicity of the periodic resources associated with the SSB. The gNB then informs the UE of the configuration when to trigger the cell re-selection immediately and when not, e.g. together with each SSB.

For instance, a parameter, exemplarily termed CG_SDT_cellreselection can be used in said respect, defined as follows:
CG_SDT_cellreselection ::= ENUMERATED (True) (if this is configured as false, then UE operates the time trigger control mechanism, e.g. timer/counter)

Similarly as mentioned above, if the periodicity is large (occasions are sparse), the gNB could configure the UE to trigger cell re-selection immediately, so as to avoid the relatively-long delays involved in awaiting the one or more periodic resource occasions. On the other hand, if the periodicity is short (occasions are dense), the gNB could configure the UE to trigger the cell-reselection only after a delay during which the UE is able to attempt one or more periodic-resource-based small-data transmissions.

In addition to and independently from the above, the small-data transmission procedure is further improved in case the cell re-selection results in the selection of a new radio cell of a new serving base station. This is not necessarily the case, because the UE may re-select a new radio cell of the serving base station, that has a significantly improved signal quality. The UE provides assistance information to the new serving gNB, after the cell re-selection. For instance, the assistance information informs the new serving base station about a preferred CG configuration, where the assistance information e.g. includes information on a traffic pattern at the UE. The new serving base station can take this assistance information into account when configuring the periodic resources for the UE.

In the cell re-selection variant explained above and below for the improved small-data transmission procedure, it is simply assumed that the UE transmits the small data in the new radio cell, without providing any further details. It is assumed that selecting a new cell with a better signal quality provides the UE with a better possibility of successfully transmitting the small data. According to exemplary implementations, the UE can use one of different mechanism for transmitting the small data in the new radio cell, e.g. a periodic-resource-based small-data transmission, a RACH-based small-data transmission, a transmission of the small data when in RRC Connected state, etc.

The different implementations of the improved small-data transmission procedure explained above and below involve the operation of the time trigger control mechanism at the UE, including the configuration of one or more parameters to operate said mechanism. In the following, four different exemplary implementations of such a time trigger control mechanism according to the improved small-data transmission procedure will be presented. A first implementation is based on a timer, upon expiry of which the UE stops attempting the periodic-resource-based small-data transmission and proceeds to transmit the small data using the alternative small-data transmission mechanism. The second implementation is based on a counter incremented with each failed periodic-resource-based small-data transmission attempt, wherein when the counter reaches a corresponding counter threshold, the UE stops attempting the periodic-resource-based small-data transmission and proceeds to transmit the small data using the alternative small-data transmission mechanism. The third implementation is based on a combination of the above-mentioned timer and counter, wherein the UE stops attempting the periodic-resource-based small-data transmission and proceeds to transmit the small data using the alternative small-data transmission mechanism, when either the timer expires or the counter reaches the counter threshold, whichever is earlier. The fourth implementation is based on an early determination at the UE as to whether there is still the possibility to attempt a periodic-resource-based small-data transmission during a defined time period, e.g. subsequent to the first failed periodic-resource-based small-data transmission attempt.

### First implementation of time trigger control mechanism - Timer, as claimed by the present invention

As mentioned above, the first implementation of the time trigger control mechanism is based on a timer, upon expiry of which the UE stops attempting the periodic-resource-based small-data transmission and proceeds to transmit the small data using the alternative small-data transmission mechanism. Therefore, the timer is used in this case to introduce a maximum delay before the UE is allowed to use the alternative transmission mechanism for transmitting the small data, independently from whether or not the UE has indeed had a further opportunity for a periodic-resource-based small-data transmission while the timer is still running. The start of the timer can thus be suitably triggered at or after the small data becomes available for transmission.

In one exemplary variant, the timer is started when the UE determines, for the first time for the transmission of the available small data, that there is no synchronization signal block having the signal quality above the signal quality threshold. In other words, the timer starts when the UE fails for the first time to perform a periodic-resource-based transmission of the small data, e.g. using a particular periodic resource occasion of an SSB. The UE needs to skip such a periodic resource occasion because the corresponding synchronization signal block does not have a good-enough quality.

In order to be able to identify such a periodic resource occasion that needs to be skipped, the UE first determines one SSB among the plural SSBs that it detects (all of which are below the signal quality threshold) and then determines the corresponding periodic resources that are associated with that one determined SSB. Therefore, the first implementation for instance includes the step of selecting one SSB among all the SSBs, for operation of the time trigger control mechanism. According to one example, the UE determines the SSB having the highest signal quality among the plural SSBs, because it is the most likely one that may improve its signal quality to be over the signal quality threshold required for the periodic-resource-based small-data transmission. According to another example, the UE determines the SSB having the next periodic resource occasion in time subsequent to the generation of the small data. According to other examples, the UE can also determine more than one SSB (also all of the detected SSBs) as the reference SSBs for operating the time trigger control mechanism.

Alternatively, the timer may start at a different point in time, e.g. when the small data becomes available for transmission or even a specific time after the small data becomes available for transmission. As such, the first implementation would not require the UE to determine particular periodic resource occasions as reference for starting the timer (including determining first any SSB of the plural detected SSBs). On the other hand, a timer would be started every time small data becomes available for transmission, even though the small data is transmitted as soon as possible using the periodic resources. Consequently, such a timer start would result in a lot of unnecessary starts of the timer. From that perspective, starting the timer when the first periodic-resource-based transmission attempt fails seems more advantageous, because the timer is only then started when there is actually a potential problem that could be solved by the use of an alternative small-data transmission mechanism.

In an exemplary variant, the timer is stopped when a successful transmission of the small data using the periodic resources occurs.

While the timer is running, i.e. has started but has not expired, the UE can proceed to attempt transmitting the available small data using the configured periodic resources. This in turn again involves a repeated determination by the UE as to whether a suitable SSB (i.e. with a high-enough signal quality) can be detected. If such a suitable SSB is detected, the UE can proceed to transmit the small data based on the corresponding periodic resources of that suitable SSB. In that case, the timer is stopped. Otherwise, the process is simply repeated until the timer expires.

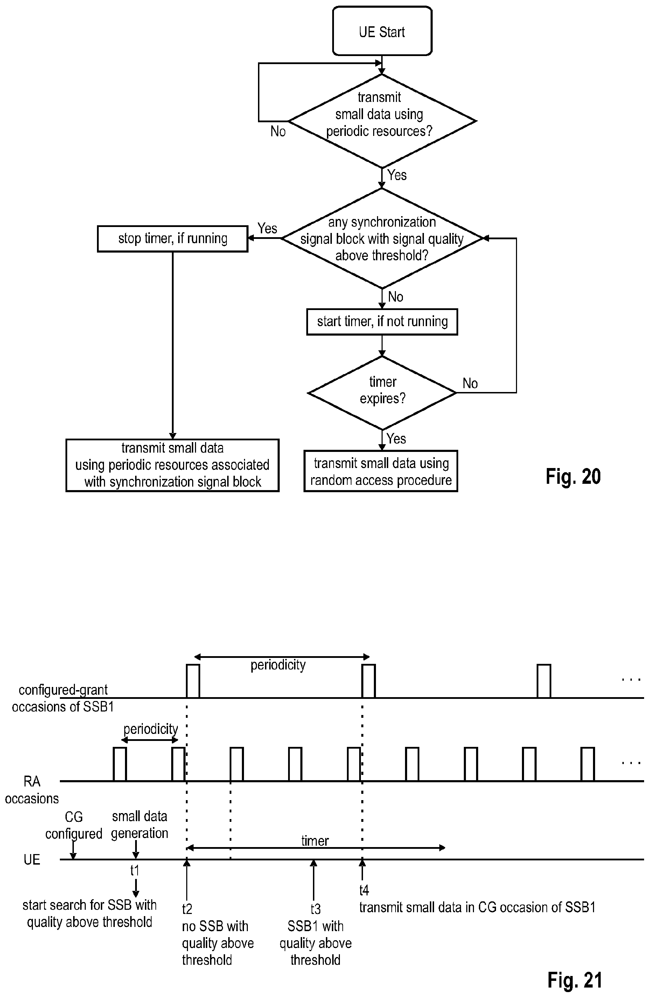

**Fig. 20** illustrates a sequence diagram for an exemplary UE behaviour according to this first implementation of the time trigger control mechanism as explained above. Correspondingly, it is assumed that small data eventually becomes available for transmission, such that the UE proceeds to determine whether there is any synchronization signal block with a signal quality above the signal quality threshold. If yes, the UE can proceed to transmit the small data using the configured periodic resources associated with the suitable SSB. If no, the UE starts the timer and keeps attempting to perform a periodic-resource-based small-data transmission until the timer expires. If the UE now find a suitable SSB, the UE stops the timer and proceeds to transmit the small data using the periodic resources associated with that suitable SSB. Upon timer expiry, the UE is allowed to resort to the alternative small-data transmission mechanism.

**Fig. 21** illustrates an exemplary scenario for the transmission of small data over time according to this first implementation of the time trigger control mechanism, particularly in case the UE succeeds in transmitting the small data using the periodic resources before the timer expires. It is exemplarily assumed that a random access procedure is used as the alternative small-data transmission mechanism. Correspondingly, the middle row illustrates the random access occasions that would be available to the UE when using this alternative small-data transmission mechanism. The bottom row of Fig. 21 illustrates the operation at the UE, including the generation of small data at t1. At time t1, the UE can also start determining whether there is any suitable SSB for the periodic-resource-based transmission of said generated small data. The top row illustrates the periodic resource occasions of one particular SSB, here SSB1, which is assumed to be the SSB selected as reference for the operation of the timer. Particularly, the timer is started at t2, which corresponds to the first periodic resource occasion of the reference SSB1, which has to be skipped by the UE for lack of any suitable SSB of the periodic-resource-based small-data transmission.

As assumed for Fig. 21, the UE, at time t3, succeeds in determining a suitable SSB (with a good-enough signal quality), which is exemplarily assumed (for facilitating the illustration) to be again SSB1 which was initially selected for operating the time trigger control mechanism. The UE then uses the next occasion offered by the periodic resources of SSB1 to transmit the small data at time t4.

However, any SSB other than SSB1 (i.e. the SSB initially selected for the time trigger control mechanism) may well improve its signal quality so as to be selected by the UE for the transmission of the small data.

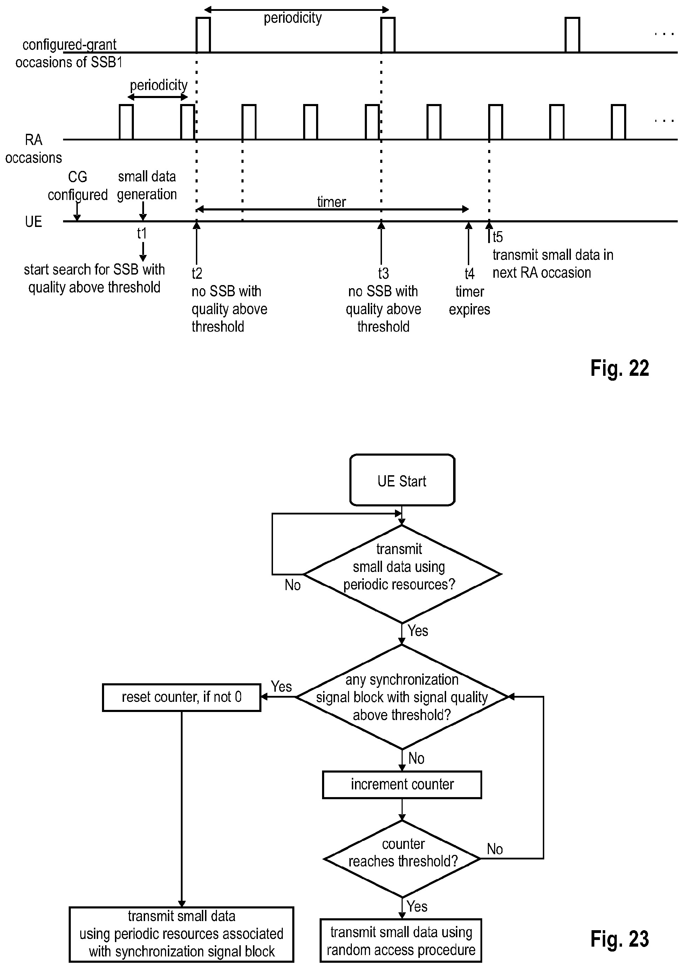

**Fig. 22** illustrates an exemplary scenario for the transmission of small data over time according to this first implementation of the time trigger control mechanism, particularly in case the UE does not succeed in transmitting the small data using the periodic resource before the timer expires but then performs the small-data transmission using a random access procedure. Similar assumptions are made for the scenario of Fig. 22 as for Fig. 21 explained above. At time t1, it is assumed that small data is generated at the UE, which may also trigger the search for a suitable SSB for the periodic-resource-based small-data transmission. Again, it is assumed that the UE selects an SSB, here SSB1, as the reference for operating the time trigger control mechanism, including starting the timer at the first skipped occasion of the periodic resources of the selected SSB1 (t2 in Fig. 22).

It is exemplary assumed that no SSB detected by the UE is good enough (i.e. above a signal quality threshold), such that a periodic-resource-based small-data transmission is not possible during the time offered by the timer. For instance, another occasion of the periodic resources of SSB1 has to be skipped by the UE for said reason (see t3 in Fig. 22). At t4, the timer expires, such that the UE uses the next RA occasion at time t5 to transmit the small data.

The first, timer-based, implementation of the time trigger control mechanism thus provides in a simple manner a configurable time for the UE to attempt further periodic-resource-based small-data transmissions before allowing the UE to use another mechanism to transmit the small data.

The value of the timer can be determined in various different ways, some of which will be presented in the following.

According to first variants, the UE can autonomously determine the timer value without a specific instruction from the gNB. According to one example of these first variants, the UE can determine the value of the timer based on pre-configured timer information stored in the UE. In this case, a 3GPP standard could define such timer information from which to derive the timer value to use, wherein the timer information could then be part of the UE's operating system. In addition or alternatively, the operator of a mobile network might define the timer information, and provide same as subscriber information e.g. in the SIM card (or e-SIM information) of the UE.

According to another example of these first variants, the UE can determine the value of the timer based on the periodicity of the periodic resources that the UE may possibly use for transmitting the available small data. The periodicity of the periodic resources of the SSBs is known to the UE from previously-obtained information, such that the UE when selecting a reference SSB for the operation of the time trigger control mechanism (e.g. SSB1 in Fig. 21, 22) can also determine the timer value based on the corresponding periodicity.

For instance, the UE determines the timer value as a fraction or multiple of said periodicity. One exemplary concept is to have a larger value of the timer for smaller periodicity, and conversely to have a smaller value of the timer for a longer periodicity. Following such a concept, if the periodic resource occasions are sparse (i.e. long periodicity), the timer value can be short, because there is no point in configuring a long timer value due to the sparse opportunities for a periodic-resource-based small-data transmission. On the other hand, if the periodic resource occasions are dense, the timer value can be longer, so as to allow the UE more attempts in performing the initially-intended periodic-resource-based small-data transmission and thus to avoid the alternative small-data transmission.

According to further second variants, the UE is configured by the base station with the timer value. Correspondingly, the UE receives a timer configuration message from the base station, e.g. via system information or in a UE-dedicated message (e.g. a RRC message). The timer configuration message correspondingly includes suitable information for the UE to determine the timer value.

For instance, a parameter, exemplarily termed CG_SDT_Timer can be used in said respect, defined as follows:

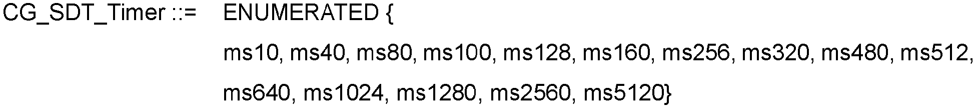

The timer value can be determined by the gNB specifically for a UE, in the sense that the timer value can be different for different UEs. Correspondingly, the gNB determines a different value of the timer for different UEs and transmits corresponding timer configuration messages, including the different timer information, to the different UEs. The gNB can take UE-specific information into account when determining the timer value, such as the services of the UE.

The second variants where the base station determines the timer values can have the advantage that the base station has more knowledge about the "best", e.g. most suitable, timer value to be used by a UE, because the base station can take various other parameters into account when determining the timer value, such as the traffic pattern, traffic characteristic of the UE and of other UEs, the interference situation in the radio cell, and QoS requirements, etc.

In addition but independently from the above first and second variants regarding how the UE can determine the timer value autonomously or with a configuration from the gNB, the value of the timer can depend on particular circumstances, such as the logical channel associated with the available small data or, as hinted at above, the particular periodic resources to be used for the small-data transmission.

In more detail, it is generally assumed that small data can be generated coming from one or more logical channels configured in the UE. The small data available for transmission can thus be associated with one or more logical channels. Logical channels can differ with regard to their characteristics, such as the traffic requirements of the logical channel, the quality of service (QoS) requirements of the logical channel, or the priority of the logical channel. The value of the timer to be used for the time trigger control mechanism can depend on the one or more logical channel associated with the small data. To said end, the UE has information associating different logical channels , or the characteristics of logical channels, with corresponding timer values. Then, the UE determines the one or more logical channels to which the available small data is associated, and derives from the stored association information the timer value that corresponds to the logical channel, or its characteristic. In case the available small data is associated with a plural of logical channels, in one example, the UE determines the smallest timer value among those timer values associated with the plural logical channels.

In another example, different periodic resources (e.g. different periodicities) can be associated with different timer values. The solution was already explained above in connection with how the UE can autonomously determine the timer value, e.g. based on a fraction or multiple of the periodicity of the periodic resources.

### Second implementation of time trigger control mechanism - Counter, not claimed by the present invention

As mentioned above, the second implementation of the time trigger control mechanism is based on a counter incremented with each failed periodic-resource-based small-data transmission attempt, wherein when the counter reaches a corresponding counter threshold, the UE stops attempting the periodic-resource-based small-data transmission and proceeds to transmit the small data using the alternative small-data transmission mechanism.

In one exemplary variant of the second implementation, the counter is increased every time that the processor fails to use a particular periodic resource location because it has failed to find a suitable synchronization signal block (i.e. with a good-enough signal quality). Therefore, the counter is used in this case to allow for a minimum number of additional attempts for a periodic-resource-based small-data transmissions before allowing the UE to use an alternative small-data transmission mechanism for transmitting the available small data. This is different compared to the timer-based first implementation of the time trigger control mechanism, which is operated somewhat independently from whether or not the UE is actually afforded with at least one further opportunity for performing the periodic-resource-based small-data transmission.

In a manner corresponding to the above explained first implementation of the time trigger control mechanism, in order to be able to identify such missed periodic resource occasions, the UE first determines one SSB among the plural SSBs that it detects (all of which are below the signal quality threshold) and then determines the corresponding periodic resources that are associated with that one determined SSB. Therefore, the second implementation for instance includes such a step of selecting one SSB among all the SSBs for operation of the time trigger control mechanism. According to one example, the UE determines the SSB having the highest signal quality among the plural SSBs, because it is the most likely one that may improve its signal quality to be over the signal quality threshold required for the periodic-resource-based small-data transmission. According to another example, the UE determines the SSB having the next periodic resource occasion in time subsequent to the generation of the small data. According to other examples, the UE can also determine more than one SSB (also all of the detected SSBs) as the reference SSBs for operating the time trigger control mechanism.

In an exemplary variant, the counter is reset when a successful transmission of the small data using the periodic resources occurs.

During the time period where the counter has not yet reached its counter threshold, the UE can proceed to attempt transmitting the available small data using the configured periodic resources. This in turn again involves a repeated determination by the UE as to whether a suitable SSB (i.e. with a high-enough signal quality) can be detected. If such a suitable SSB is detected, the UE can proceed to transmit the small data based on the corresponding periodic resources of that suitable SSB. In that case, the counter is reset. Otherwise, the counter is increased with each failed attempt, and the process is repeated at each further periodic resource occasion.

**Fig. 23** illustrates a sequence diagram for an exemplary UE behaviour according to this second implementation of the time trigger control mechanism as explained above. Correspondingly, it is assumed that small data eventually becomes available for transmission, such that the UE proceeds to determine whether there is any synchronization signal block with a signal quality above the signal quality threshold. If yes, the UE can proceed to transmit the small data using the configured periodic resources associated with the suitable SSB. If no, the UE starts the operation of the counter and increases the counter by 1 for the skipped periodic-resource-based small-data transmission occasion. The UE keeps attempting to perform a periodic-resource-based small-data transmission until the counter reaches a corresponding counter threshold. If the UE now find a suitable SSB, the UE resets the counter and proceeds to transmit the small data using the periodic resources associated with that suitable SSB. When the counter reaches the threshold, the UE is allowed to resort to the alternative small-data transmission mechanism.

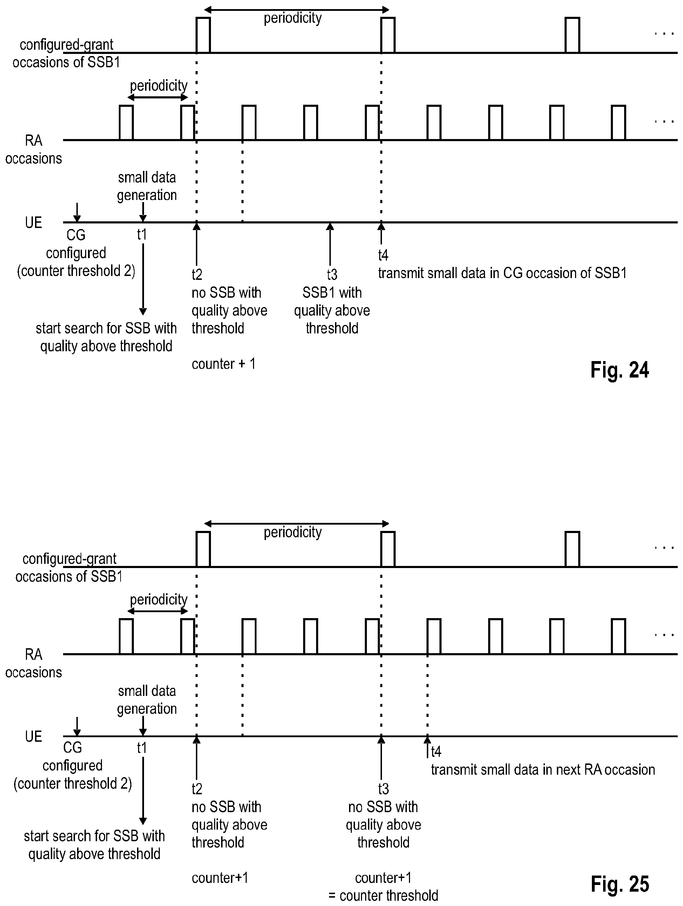

**Fig. 24** illustrates an exemplary scenario for the transmission of small data over time according to this second implementation of the time trigger control mechanism, particularly in case the UE succeeds in transmitting the small data using the periodic resources before the counter reaches the counter threshold. In a similar manner as for Fig. 21 and 22, it is exemplarily assumed that a random access procedure is used as the alternative small-data transmission mechanism. It is assumed that a counter threshold of two is configured in the UE, i.e. that the UE has two attempts to transmit the available small data with the initially configured periodic resources before being allowed to use the alternative small-data transmission mechanism. At time t1, the UE generates small data and can also start determining whether there is any suitable SSB for the periodic-resource-based transmission of said generated small data. The top row of Fig. 24 illustrates the periodic resource occasions of one particular SSB, here SSB1, which is assumed to be the SSB selected as reference for the operation of the counter.

At time t2, the UE has the first periodic resource occasion of the reference SSB1, which however has to be skipped by the UE for lack of any suitable SSB for the periodic-resource-based small-data transmission. Correspondingly, the counter is increased by 1 and thus has the value 1.

It is further assumed that the UE, at time t3, succeeds in determining a suitable SSB, which is exemplarily assumed (for facilitating the illustration) to be again SSB1 which was initially selected for operating the time trigger control mechanism. The UE then uses the next occasion offered by the periodic resources of SSB1 to transmit the small data at time t4. However, any SSB other than SSB1 (i.e. the SSB initially selected for the time trigger control mechanism) may well improve its signal quality so as to be selected by the UE for the transmission of the small data using periodic resources of said SSB.

**Fig. 25** illustrates an exemplary scenario for the transmission of small data over time according to this second implementation of the time trigger control mechanism, particularly in case the UE does not succeed in transmitting the small data using the periodic resource before the counter reaches the counter threshold but then performs the small-data transmission using a random access procedure. Similar assumptions are made for the scenario of Fig. 25 as for Fig. 24 explained above. At time t1, it is assumed that small data is generated at the UE, which may also trigger the search for a suitable SSB for the periodic-resource-based small-data transmission. Again, it is assumed that the UE selects an SSB, here SSB1, as the reference for operating the time trigger control mechanism, including increasing the counter at the first skipped occasion of the periodic resources of the selected SSB1 (t2 in Fig. 25).

It is exemplary assumed that no SSB detected by the UE is good enough (i.e. above a signal quality threshold), such that a periodic-resource-based small-data transmission is not possible for the number of attempts offered by the counter. In particular, the next periodic resource occasion at t3 has to be skipped by the UE for the same reason, which results in a further increment of the counter. Correspondingly, the counter reaches the value 2 and thus reaches the configured counter threshold. Correspondingly, the UE uses the next RA occasion at time **t4** to transmit the small data.

The second, counter-based, implementation of the time trigger control mechanism thus ensures that the UE at least has a minimum number of attempts for performing a periodic-resource-based small-data transmission, which is not guaranteed for the first, timer based, implementation of the time trigger control mechanism. On the other hand, for particularly long periodicities of the selected reference SSB, the delay introduced by this counter mechanism can be significant, which is avoided by providing an upper time limit when using a timer as explained for the first implementation.

In a similar manner as for the value of the timer, the value of the counter threshold can be determined in various different ways. In order to avoid repetition, reference is made to the corresponding description with regard to how to determine the value of the timer. In brief, according to first variants, the UE can autonomously determine the counter threshold value without a specific instruction from the base station, e.g. from a preconfigured counter information stored in the UE or based on the periodicity of the periodic resources that the UE will use for transmitting the available small data (e.g. fraction or multiple of the periodicity).

Furthermore, according to second variants, the UE is configured by the base station with a particular counter threshold value, e.g. using a counter threshold configuration message from the base station.

For instance, a parameter, exemplarily termed CG_SDT_Counter_threshold can be used in said respect, defined as follows:

```
 CG_SDT_Counter_threshold ::= Integer (0..65535)
```

Moreover, the base station can determine the value of the counter threshold following the same principles as disclosed above for determining the timer value, e.g. taking into account other parameters such as the traffic pattern, traffic characteristics of the UE and other UEs, and other UE-specific information, the counter being UE-specific etc.

In addition but independently from the above first and second variants regarding how the UE can determine the counter threshold value autonomously or with the configuration from the gNB, the value of the counter threshold can depend on particular circumstances, such as logical channel associated with the available small data or the particular periodic resources to be used for the transmission of the small data. Again, reference is made to the particular detailed description made in said respect in connection with the timer value, e.g. the logical-channel-dependent counter threshold value and the periodic-resource-dependent counter threshold value and the UE-specific counter threshold value.

### Third implementation of time trigger control mechanism - Combination of timer and counter, as claimed by the present invention

As mentioned above, the third implementation of the time trigger control mechanism is based on a combination of the above-mentioned timer and counter, wherein the UE stops attempting the periodic-resource-based small-data transmission and proceeds to transmit the small data using the alternative small-data transmission mechanism, when either the timer expires or the counter reaches the counter threshold, e.g. whichever is earlier. Alternatively, the use of the alternative small-data transmission mechanism is only triggered when both mechanisms are triggered. Put differently, the third implementation is a combination of the first and second implementations of the time trigger control mechanism that allows benefiting from the advantages of both implementations. In particular, the use of both mechanisms of the time trigger control allows to set an upper time limit (i.e. the timer) or an upper attempt limit (i.e. the counter) to trigger the alternative small-data transmission mechanism based on whichever mechanism triggers first. Another benefit is that if CG resources periodicity are sparse, then it may take longer time for UE to reached counter threshold. Such issue can solve by relying on timer.

The operation of the timer according to this third implementation can be the same as explained in detail above for the first implementation. Similarly, the operation of the counter according to this third implementation can be the same as explained in detail above for the second implementation. The timer and counter are then operated in parallel respectively as explained above.

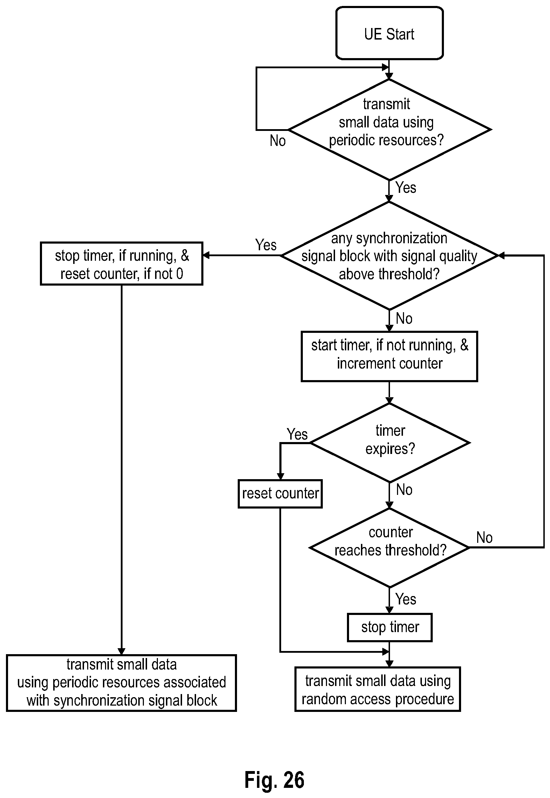

**Fig. 26** illustrates a sequence diagram for an exemplary UE behaviour according to this third implementation of the time trigger control mechanism as explained above. In this exemplary implementation of Fig. 26, the timer expiry is checked first and then the counter threshold. But other implementations are equally possible, such as where the counter threshold is checked first and then the timer expiry, or where the two checks are performed in parallel.

Furthermore, the operation of the timer and counter mechanism can also be adapted so as to corresponding influence the other mechanism, e.g. resetting the counter when the timer expires, or stopping the timer when the counter reaches the threshold.

Otherwise, the UE behaviour of the third implementation is a direct combination of the first and second implementations, including the start of the timer respectively the first increment of the counter occuring after the first failed periodic-resource-based small-data transmission (see "any synchronization signal block with signal quality above threshold" in Fig. 26). Repeated attempts of a periodic-resource-based small-data transmission are allowed if neither the timer expires nor the counter reaches the counter threshold. If any of the conditions becomes true, the UE can proceed to transmit the small data using the alternative small-data transmission mechanism (here exemplary the random access procedure).

### Fourth implementation of time trigger control mechanism - time period determination, as claimed by the present invention

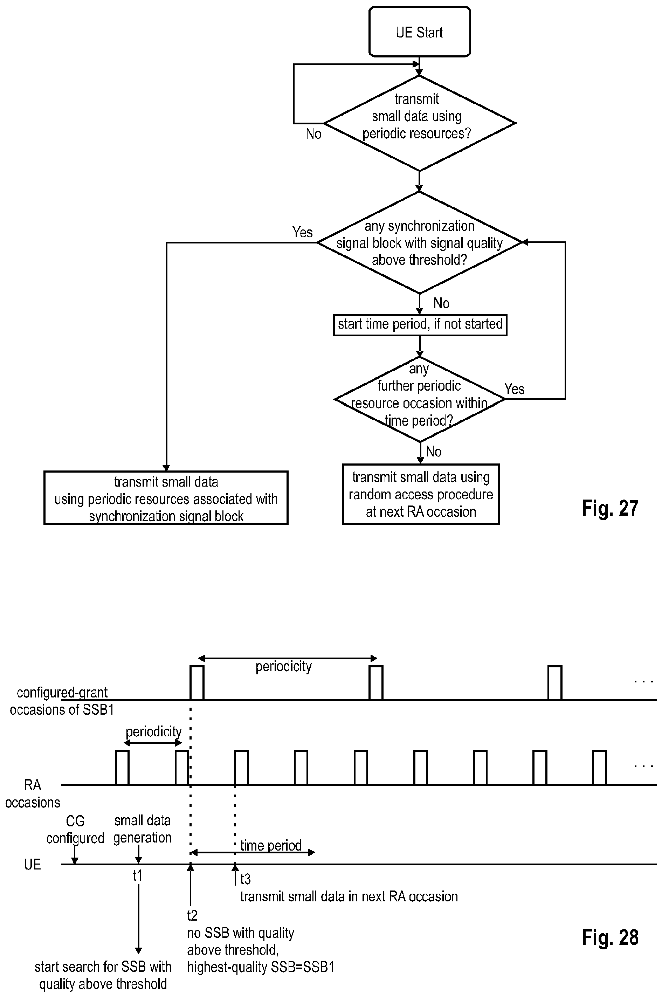

As mentioned above, the fourth implementation of the time trigger control mechanism is based on an early determination at the UE as to whether there is still the possibility to attempt a further periodic-resource-based small-data transmission during a defined time period, e.g. subsequent to the first failed periodic-resource-based small-data transmission attempt (e.g. when determining for the first time that there is no good-enough SSB for the transmission of the small data. Therefore, the fourth implementation allows to determine in a simple manner and at a very early stage whether or not it is even worthwhile to delay the alternative small-data transmission. For instance, in case there are no more periodic resource occasions during that time period, the UE will effectively have no or only a little chance to even attempt a further periodic-resource-based small-data transmission. In such a case, the UE can decide to use the alternative small-data transmission mechanism for transmitting the small data at the next opportunity after the negative determination (e.g. next RA occasion, see Fig. 28).

On the other hand, in case the UE determines there are one or more periodic resource occasions for transmitting the available small data during said time period, the UE can delay using the alternative small-data transmission mechanism until after having attempted to transmit the small data using said remaining periodic resource occasions during the time period. Then, the UE may succeed in transmitting the small data in one of those remaining periodic resource occasions, which includes determining that at least one of the SSBs has improved to have a signal quality higher than the threshold.

Or, if the UE also fails to transmit the small data in any one of those remaining periodic resource occasions (because the UE fails to find a suitable SSB), the UE can then determine after the last of said remaining periodic resource occasions to use the alternative small-data transmission mechanism to transmit the available small data. The alternative small-data transmission can be performed e.g. at a next opportunity after the last skipped periodic resource occasion of said time period or at a next opportunity after the expiry of the time period.

In one exemplary variant, the time period starts with the first failed periodic-resource-based transmission attempt, at the first periodic resource occasion of an SSB. Alternatively, the time period can also start at another point in time for instance at the beginning when the small data is generated.

The determination can also be implemented by comparing the periodicity of the periodic resources with the length of the time period. In case the periodicity is longer than the time period, then there is no further periodic resource occasion. In case the periodicity is shorter than the time period, there should be at least one further periodic resource occasion.

In a manner corresponding to the above explained first, second and third implementations of the time trigger control mechanism, in order to be able to identify such missed periodic resource occasions, the UE first determines one SSB among the plural SSBs that it detects (all of which are below the signal quality threshold) and then determines the corresponding periodic resources that are associated with that one determined SSB. Therefore, the fourth implementation for instance may also include such a step of selecting one SSB among all the SSBs for operation of the time trigger control mechanism. According to one example, the UE determines the SSB having the highest signal quality among the plural SSBs, because it is the most likely one that may improve its signal quality to be over the signal quality threshold required for the periodic-resource-based small-data transmission. According to another example, the UE determines the SSB having the next periodic resource occasion in time subsequent to the generation of the small data. According to other examples, the UE can also determine more than one SSB (also all of the detected SSBs) as the reference SSBs for operating the time trigger control mechanism. In this latter case, however, with increasing number of reference SSBs it becomes less likely that there is no periodic resource occasion during the time period, such that an immediate use of the alternative small-data transmission mechanism becomes less likely as well.

**Fig. 27** illustrates a sequence diagram for an exemplary UE behaviour according to this fourth implementation of the time trigger control mechanism as explained above. As apparent from Fig. 27, a sequence step of the UE behaviour is "start time period, if not started", which is performed in case no suitable SSB is found by the UE for the first time when trying to transmit the available small data. This sequence step is to be understood in combination with the subsequent check of "any further periodic resource occasions within time period". In particular, the UE will thus successively attempt to transmit the small data at every periodic resource occasion during the time period, either until the UE finds a suitable SSB and transmit the small data using the periodic resources associated with that SSB or until there are no further periodic resource occasions within the initially-determined time period. If the UE determines that there no more remaining periodic resource occasions within said time period, the UE can trigger the alternative small-data transmission mechanism for transmitting the small data pending for transmission.

**Fig. 28** illustrates an exemplary scenario for the transmission of small data over time according to this fourth implementation of the time trigger control mechanism, particularly in case the UE determines that there are no further configured grant occasions during the subsequent time period. It is again exemplary assumed that a random access procedure is used as the alternative small-data transmission mechanism, and the middle row of Fig. 28 correspondingly illustrates the random access occasions. Further, it is exemplarily assumed that small data eventually becomes available for transmission (see time t1), such that the UE proceeds to start determining whether there is any SSB with a signal quality above the corresponding signal quality threshold. The top row of Fig. 28 illustrates the periodic resource occasions of one particular SSB, here SSB1, which is assumed exemplarily to be the SSB selected as reference for operating the time-period-based time trigger control mechanism of the fourth implementation.

At time t2, the UE would have the first possibility to transmit the small data using the periodic resource occasion of the reference SSB1, which however has to be skipped by the UE because neither SSB1 nor any other detected SSB has a good enough quality for a periodic-resource-based small-data transmission. At time t2, the UE thus determines a time period and then determines whether there is one more periodic resource occasion of SSB1 during that time period. Since this is not the case for the exemplary scenario of Fig. 28, the UE proceeds to transmit the pending small data at the next random access occasion at time t3.

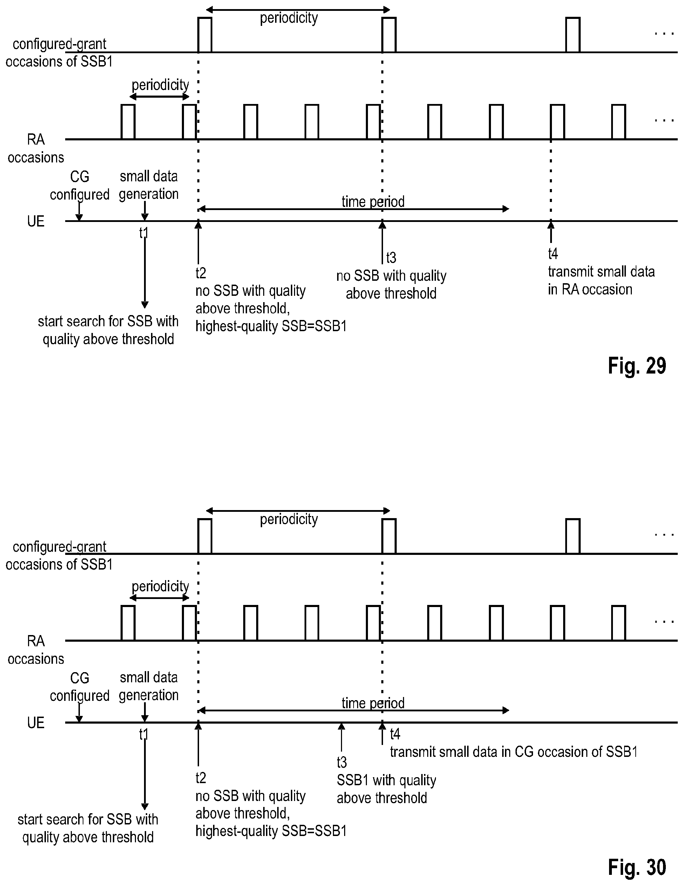

**Fig. 29** illustrates an exemplary scenario for the transmission of small data over time according to this fourth implementation of the time trigger control mechanism, particularly in case the UE determines that there is a further configured grant occasion during the subsequent time period but where the UE still fails to perform the periodic-resource-based small-data transmission. The assumptions are basically the same as for Fig. 28 discussed above. On the other hand, the time period to be used by the UE at time t2 is significantly longer than in the exemplary scenario illustrated in Fig. 28 such that the periodic resource occasion of time t3 falls within that time period.

For said reason, the UE does not immediately perform the alternative small-data transmission. Instead, the UE keeps attempting to transmit the small data using periodic resources of any suitable SSB (not only of the reference SSB1), and therefore keeps checking whether any SSB has a signal quality above the signal quality threshold. Because it is assumed that no suitable SSB is found, the UE has to skip the periodic resource occasion of SSB1 at t3, and as a result determines to use the first random access occasion at time t4 (first RA occasion after the end of the time period) so as to transmit the small data.

Although not illustrated in Fig. 29, an alternative solution would involve using the first random access occasion after time t3 for transmitting the small data using the random access procedure. This first RA occasion can be even during the time period, albeit after the last periodic resource occasion of SSB1. Such a solution has the potential advantage of not introducing a further delay before using the alternative small-data transmission mechanism.

**Fig. 30** illustrates an exemplary scenario for the transmission of small data over time according to this fourth implementation of the time trigger control mechanism, particularly in case the UE determines that there is a further configured grant occasion during the subsequent time period and where the UE is able to perform the periodic-resource-based small-data transmission in that occasion. In accordance with this scenario, the UE, after having failed to transmit the small data using the periodic resource occasion of the reference SSB1 at time t2, is still able to perform the periodic-resource-based small-data transmission at time t4, because the signal quality of SSB1 improves so much so as to be above the required signal quality threshold (see time t3). Although in the above scenario it was assumed that the reference SSB1 improves to be selected, any SSB other than the reference SSB1 may improve and be selected by the UE for the transmission of the small data using periodic resources of said SSB.

The time period can be determined in various different ways, similar or the same as for the timer value of the first and third implementations and the counter threshold value of the second and third implementations; reference is made to the corresponding description parts regarding how to determine the value of the timer and the value of the counter threshold.

In particular, according to first variants, the UE can autonomously determine the time period without a specific instruction from the gNB. According to one example of these first variants, the UE can determine the length of the time period based on pre-configured time period information stored in the UE. In this case, a 3GPP standard could define such time period information from which to derive the time period length to use, wherein the time period information could then be part of the UE's operating system. In addition or alternatively, the operator of a mobile network might define the time period information, and provide same as subscriber information e.g. in the SIM card (or e-SIM information) of the UE.

According to another example of these first variants, the UE can determine the length of the time period based on the periodicity of the periodic resources that the UE will use for transmitting the available small data. The periodicity of the periodic resources of the SSBs is known to the UE from previously-obtained information, such that the UE when selecting an SSB for the operation of the time trigger control mechanism can also determine the length of the time period based on the corresponding periodicity.

For instance, the UE determines the time period length as a fraction or multiple of said periodicity. One exemplary concept is to have a larger time period length for a smaller periodicity, and conversely to have a smaller time period length for a longer periodicity. Following such a concept, if the periodic resource occasions are sparse (i.e. long periodicity), the time period length can be short, because there is no point in allowing for many transmission attempts due to the sparse opportunities for a periodic-resource-based small-data transmission. On the other hand, the periodic resource occasions are dense, the time period length can be longer, so as to allow the UE more attempts in performing the initially-intended periodic-resource-based small-data transmission and thus to avoid the alternative small-data transmission.

According to further second variants, the UE is configured by the base station with the time period length. Correspondingly, the UE receives a time period configuration message from the base station, e.g. via system information or in a UE-dedicated message (e.g. a RRC message). The time period configuration message correspondingly includes suitable information for the UE to determine the length of the time period.

For instance, a parameter, exemplarily termed CG_SDT_Timer can be used in said respect, defined as follows:

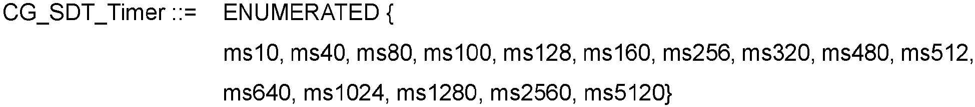

The time period length can be determined by the gNB specifically for a UE, in the sense that the time period length may be different for different UEs. Correspondingly, the gNB determines the different length of the time period for different UEs and transmits corresponding time period configuration messages, including the different time period lengths, to the different UEs.

The second variants where the base station determines the time period length can have the advantage that the base station has more knowledge about the "best", e.g. most suitable, time period length to be used by a UE, because the base station can take various other parameters into account, such as the traffic pattern, traffic characteristic of the UE and of other UEs, the interference situation in the radio cell, QoS requirements, etc.

In addition but independently from the above first and second variants regarding how the UE can determine the time period length autonomously or with a configuration from the gNB, the length of the time period can depend on particular circumstances, such as the logical channel associated with the available small data or, as hinted at above, the particular periodic resources to be used for the small-data transmission.

In more detail, it is generally assumed that small data can be generated coming from one or more logical channels configured in the UE. The small data available for transmission can thus be associated with one or more logical channels. Logical channels can differ with regard to their characteristics, such as the traffic requirements of the logical channel, the quality of service (QoS) requirements of the logical channel, or the priority of the logical channel. The length of the time period to be used for the time trigger control mechanism can depend on the one or more logical channel associated with the small data. To said end, the UE has information associating different logical channels, or the characteristics of logical channels, with corresponding time period lengths. Then, the UE determines the one or more logical channels to which the available small data is associated, and derives from the stored association information the time period length. In case the available small data is associated with a plural of logical channels, in one example, the UE determines the smallest time period length among those time period lengths associated with the plural logical channels.

In another example, different periodic resources (e.g. different periodicities) can be associated with different time period lengths. The solution was already explained above in connection with how the UE can autonomously determine the time period length, e.g. based on a fraction or multiple of the periodicity of the periodic resources.

In the above disclosure, four different exemplary implementations of the time trigger control mechanism operated at the UE have been described.

Independently from the above, further implementations of the improved small-data transmission procedure focus on improving how the UE fulfils the requirements that the SSB for the periodic-resource-based small-data transmission should have a good-enough signal quality. In other implementations of the improved small-data transmission procedure, it was assumed that the UE compares the quality of each detected SSB with a single signal quality threshold. Put differently, it was exemplary assumed that a single signal quality threshold is commonly used for comparing all SSBs against it.

However, the use of only a single threshold is not required by further advantageous implementations of the improved small-data transmission procedure, which allow using a plurality of signal quality thresholds against which the SSBs can be compared.

In particular, this implementation of the improved small-data transmission procedure further includes a determination of the signal quality threshold, e.g. among a plurality of signal quality thresholds that are available to the UE. For instance, the signal quality threshold can differ between the different SSBs detected by the UE, e.g. depending on the periodic resources of each SSB. As a result, the signal quality threshold may differ per SSB, such that the UE compares the signal quality of each detected SSB against an SSB-specific signal quality threshold.

Such an implementation has the advantage that the selection of a suitable SSB is facilitated (e.g. lower signal quality threshold) or made difficult (e.g. higher signal quality threshold) as appropriate for the small-data transmission via the respectively-different SSBs.

According to first variants, the determination of the signal quality threshold takes into account the one or more transmission parameters that are usable by the UE for the transmission of the small data via an SSB. For instance, the transmission parameters may include one or more of a transport block size, a modulation scheme and a coding rate, which are defined in connection with the periodic resources of an SSB. The transmission parameters to be used by the UE for the small-data transmission may differ per detected SSB and are known to the UE in the same manner as the periodic resources associated with the detected SSB.

For instance, the UE can have stored association information that associates a particular signal quality threshold value with one or more of the transmission parameters. Correspondingly, when the UE checks a particular signal quality of an SSB, the UE first determines the one or more relevant transmission parameters that are associated with that SSB and which are to be used for transmitting the small data via that SSB. The UE then derives the associated signal quality threshold value based on the determined one or more transmission parameters and the stored association. The signal quality of that SSB is then compared against the thus-derived signal quality threshold value.

One exemplary underlying principle for the first variants of how a signal quality threshold can differ depending on one or more transmission parameters is presented in the following. The underlying principle is that the signal quality threshold should match the transmission parameters for increasing the likelihood of a successful small-data transmission. For instance, the signal quality threshold can have a high value associated with one or more of a large transport block size and a high modulation scheme. Therefore, when transmission parameters are to be used that generally benefit from a higher channel quality (e.g. 16 QAM or 64 QAM rather than QPSK), the implementation requires using a comparatively higher signal quality threshold so that the channel quality of the selected SSB is higher and the small-data transmission is more likely to be successful.

Conversely, the signal quality threshold can have a low value associated with one or more of a small transport block size and a low modulation scheme. Therefore, when transmission parameters are to be used that do not necessarily require a high channel quality (e.g. BPSK or QPSK rather than 16 QAM or 64 QAM), the implementation allows for a comparatively lower signal quality threshold. As a result, the UE is allowed to also use an SSB with a comparatively lower signal quality, because comparatively robust transmission parameters (e.g. modulation scheme, coding rate) are used such that the small-data transmission is still likely to be successful.

Therefore, one advantage of the first variants can be that a successful small-data transmission using the periodic resources becomes more likely, because the SSB selection is tailored to the small-data transmission itself, e.g. the transmission parameters to be employed by the UE for transmitting the small data over the respective SSB. For instance, the UE might be allowed to select an SSB with a comparatively bad signal quality (in case of robust transmission parameters), which otherwise the UE might not have been able to select due to a commonly used signal quality threshold.

According to second variants, the determination of the signal quality threshold takes into account a priority associated with the periodic resources of an SSB to be used by the UE for the transmission of the small data. In more detail, the periodic resources configured for an SSB can also be associated with a priority that e.g. reflects the reliability requirement of the periodic resources configured by the gNB.

The priority of the periodic resources of each SSB is thus known to the UE in the same manner as the periodic resources themselves.

For instance, the UE can have stored association information that associates a particular signal quality threshold value with a priority. Correspondingly, when the UE checks a particular signal quality of an SSB, the UE first determines the priority associated with that SSB. The UE then derives the associated signal quality threshold value based on the determined priority and the stored association. The signal quality of that SSB is then compared against the thus-derived signal quality threshold value.

One exemplary underlying principle for the second variants of how a signal quality threshold can differ depending on the priority is presented in the following. For instance, the higher the priority of the periodic resources, the higher the signal quality threshold, so as to ensure that the transmission of the small data is reliable in accordance with the reliability requirement reflected by the priority. Conversely, the lower the priority of the periodic resources, the lower the signal quality threshold.

The above-described implementation, and its variants, present a solution where different signal quality thresholds can be used instead of a single common signal quality threshold for all SSBs. Independently from the above, the SSB thresholds can be determined autonomously by the UE without necessarily having threshold configuration information from the gNB or can be determined by the UE based on threshold configuration information provided by the gNB.

The various SSB thresholds can be determined by the gNB and then informed to the UE, e.g. together with the configuration of the different periodic resources. For instance, the SSB-specific configuration of the periodic resources by the gNB thus also includes the configuration of the SSB-specific signal quality threshold.

For instance, dedicated parameters can be used in said respect, defined as follows: 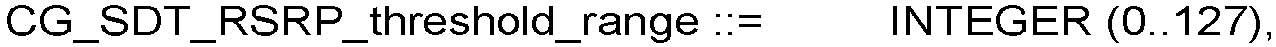 or

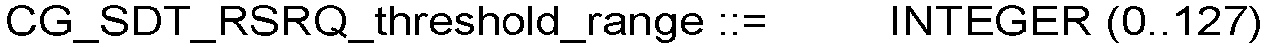

The gNB can determine each signal quality threshold as explained above, e.g. taking into account one or more of the transmissions parameters of the periodic resources or the priority of the periodic resources specific to each SSB.

In other solutions, the UE may autonomously determine the SSB-specific signal quality threshold without a particular configuration of the signal quality threshold from the gNB. In said connection, the UE determines for each SSB-signal-quality check the suitable signal quality threshold according to one of the above variants, e.g. taking into account one or more of the transmissions parameters of the periodic resources or the priority of the periodic resources. This information is known to the UE, such that dedicated configuration information from the gNB would not be necessary.

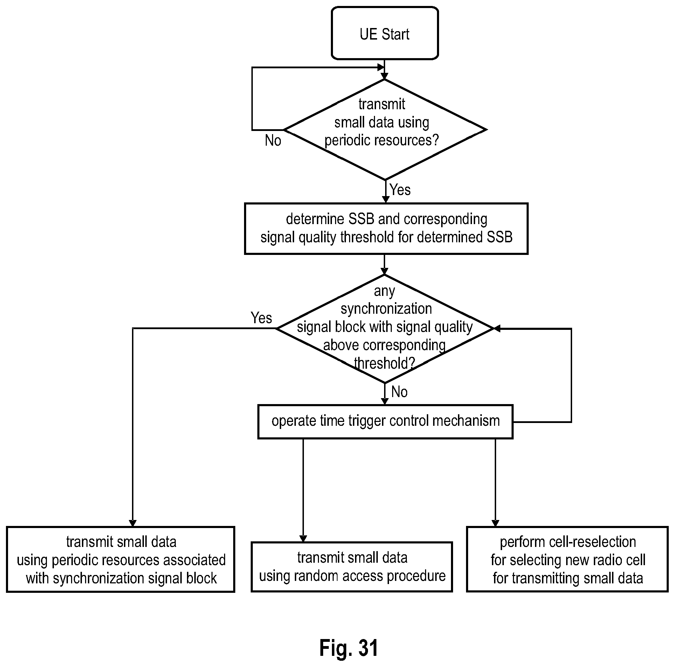

**Fig. 31** illustrates a sequence diagram for an exemplary UE behaviour according to this advantageous implementation of the improved small-data transmission procedure. Fig. 31 is exemplarily based on the general improved small-data transmission procedure as described in connection with Fig. 16. Compared to the general solution of Fig. 16, this implementation additionally includes a sequence step of determining an SSB and determining the corresponding signal quality threshold for that SSB and furthermore adapts the subsequent SSB check, which checks whether that SSB has a good enough quality, so as to be performed against this specifically determined signal quality threshold.

Although the differences are only explained in connection with Fig.31 compared to Fig. 16, the differences specific to this implementation can also be applied to other implementations of the improved small-data procedure, e.g. the UE behaviours illustrated in and described for the UE sequence diagrams of Fig. 20, 23, 26, and 27.

In the above description of this implementation, the use of several signal quality thresholds was described as being used in addition to the previously-described improved small-data transmission procedure that operates the time trigger control mechanism to trigger the use of the alternative small-data transmission mechanism in a suitable manner.

However, the use of several signal quality thresholds according to the above explained implementation can also be provided in a standalone manner independently from the timer trigger control mechanism and the alternative small-data transmission mechanism. For instance, the UE would determine that small data has become available for transmission using periodic resources. As required for a periodic-resource-based transmission, the UE would determine one of a plurality of synchronization signal blocks having a signal quality above a signal quality threshold. In more detail, this would be done based on any of the variants of the present implementation explained above, and for instance involves determining a suitable signal quality threshold (e.g. among a plurality of thresholds), and then involves comparing the signal quality of each SSB against the signal quality threshold specifically determined by the UE for that purpose.

Then, in case a suitable SSB is detected by the UE having the signal quality above the specifically-determined signal quality threshold, the UE determines the periodic resources associated with that determined synchronization signal block and transmits the available small data using the determined periodic resources. On the other hand, in case no suitable SSB is detected by the UE, the UE cannot transmit the data and continues searching for a suitable SSB for transmitting the available small data.

In the following, another implementation of the improved small-data transmission procedure will be explained. This improved small-data transmission procedure is independent from the previously described implementation, but can be also combined with any of the above. In particular, the present implementation provides a further trigger to use a random-access-based small-data transmission procedure, even when the UE is configured to perform a periodic-resource-based small-data transmission procedure.

The UE can determine whether the available small data to be transmitted is above a data volume threshold, which can be configured for instance by the gNB. In one example, this additional determination can be performed by the UE when the UE fails to transmit the small data using the periodic resources, due to the lack of a suitable SSB (which has a good-enough signal quality). Then, in case the amount of small data is above the data volume threshold, the UE aborts the periodic-resource-based small-data transmission and instead transmit the small data using a random access procedure.

On the other hand, if the UE determines that the amount of small date is below the data volume threshold, the UE may proceed with the initially intended parodic resource based small data transmission or according to any of the above described implementations (e.g. using one of the first to fourth implementations of the time control trigger).

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive; the scope of the invention is defined by the appended claims.

## Claims

1. A user equipment, UE, comprising:
a processor, which in operation, being configured to determine that small data has become available for transmission, wherein the available small data is to be transmitted using periodic resources without a prior scheduling request from the UE,
wherein transmitting the available small data using the periodic resources includes that the processor, when in operation, is configured to determine one of a plurality of synchronization signal blocks having a signal quality above a signal quality threshold,
in case the processor determines there is no synchronization signal block having the signal quality above the signal quality threshold:
• the processor, when in operation, is configured to operate a time trigger control mechanism, and
• the processor, when in operation, is configured to control the UE to perform an alternative small-data transmission mechanism, instead of transmitting the available small data using the periodic resources, according to the operated time trigger control mechanism,
wherein the alternative small-data transmission mechanism includes:
• transmitting, by a transmitter of the UE, the available small data using a random access procedure,
wherein the processor is configured to perform the time trigger control mechanism based on a timer.

2. The UE according to claim 1, wherein the time trigger control mechanism is controlled, in accordance with a parameter, so as to attempt avoiding to perform the alternative small-data transmission mechanism,
optionally wherein the time trigger control mechanism is operated by the processor, in accordance with the parameter, so as to allow the processor, when in operation, to transmit the available small data using the periodic resources, including determining one of the plurality of synchronization signal blocks having the signal quality above the signal quality threshold for the periodic-resource-based transmission of the available small data.

3. The UE according to claim 1 or 2, wherein the timer is operated according to one or more of the following:
• starting the timer when the processor determines, for the first time for the transmission of the available small data, that there is no synchronization signal block having the signal quality above the signal quality threshold,
• while the started timer has not expired,
∘ the processor attempts transmitting the available small data using the periodic resources, respectively including determining one of the plurality of synchronization signal blocks having the signal quality above the signal quality threshold,
∘ stopping the started timer, in case the UE succeeds in transmitting the available small data using the periodic resource at a periodic resource occasion,
• when the timer expires, the processor controls the UE to perform the alternative small-data transmission mechanism.

4. The UE according to claim 1, wherein the processor, when in operation, determines a value of the timer based on one or more of the following:
pre-configured timer information indicating one value of the timer, optionally wherein the pre-configured timer information is stored in the UE as part of an operating system of the UE or as part of subscriber information,
a timer configuration message, wherein the UE includes a receiver, which in operation, receives the timer configuration message from a serving base station, optionally wherein the timer configuration message is received from system information or is a message dedicated to the UE,
a periodicity of the periodic resources to be used for transmitting the available small data, wherein the processor, when in operation, determines the value of the timer as a multiple or a fraction of said periodicity, optionally wherein the processor, when in operation, determines a larger value of the timer for a smaller periodicity of the periodic resources and determines a smaller value of the timer for a larger periodicity of the periodic resources,
one of at least one logical channel with which the small data is associated, wherein the processor, when in operation, determines, from stored timer information, a value that is associated with said logical channel as the value of the timer, optionally wherein the processor determines the smallest value among plural values associated with plural logical channels with which the small data is associated as the value of the timer, optionally wherein value of the timer is determined based on one or more of traffic requirements, Quality of Service requirements, and priority of a logical channel,
the value of the timer is UE-specific.

5. The UE according to claim 1 or 2, wherein the processor performs the time trigger control mechanism based on a counter, that counts the number of times the processor determines that there is no synchronization signal block having the signal quality above the signal quality threshold for the transmission of the available small data,
optionally wherein the counter is operated according to one or more of the following:
• increasing the counter every time the processor determines, for an occasion of the periodic resources, that there is no synchronization signal block having the signal quality being above the signal quality threshold for the transmission of the available small data,
• while the counter has not reached a counter threshold,
∘ the processor attempts transmitting the available small data using the periodic resources, respectively including determining one of a plurality of synchronization signal blocks having the signal quality above the signal quality threshold,
∘ stopping the counter, in case the UE succeeds in transmitting the available small data using the periodic resources at a periodic resource occasion,
• when the counter reaches the counter threshold, the processor controls the UE to perform the alternative small-data transmission mechanism.

6. The UE according to claim 5, wherein the processor, when in operation, determines a value of the counter threshold based on one or more of the following:
pre-configured counter information indicating one value of the counter threshold, optionally wherein the pre-configured counter information is stored in the UE as part of an operating system of the UE or as part of subscriber information,
a counter configuration message, wherein the UE includes a receiver, which in operation, receives the counter configuration message from a serving base station, optionally wherein the counter configuration message is received from system information or is a message dedicated to the UE,
a periodicity of the periodic resources to be used for transmitting the available small data, wherein the processor, when in operation, determines the value of the counter threshold as a multiple or a fraction of said periodicity, optionally wherein the processor, when in operation, determines a larger value of the counter threshold for a smaller periodicity of the periodic resources and determines a smaller value of the counter threshold for a larger periodicity of the periodic resources,
one of at least one logical channel with which the small data is associated, wherein the processor, when in operation, determines, from stored counter information, a value that is associated with said logical channel as the value of the counter threshold, optionally wherein the processor determines the smallest value among plural values associated with plural logical channels with which the small data is associated as the value of the counter threshold, optionally wherein value of the counter threshold is determined based on one or more of traffic requirements, Quality of Service requirements, and priority of a logical channel,
the value of the counter threshold is UE-specific.

7. The UE according to claims 1 and 5, wherein the processor performs the time trigger control mechanism based on a combination of the timer and the counter, wherein the processor controls the UE to perform the alternative small-data transmission mechanism when the counter reaches the counter threshold or the timer expires, whichever is earlier.

8. The UE according to claim 1 or 2, wherein the processor performs the time trigger control mechanism, based on whether there are one or more periodic resource occasions during a time period subsequent to the determining that there is no synchronization signal block having the signal quality above the signal quality threshold for transmitting the available small data,
optionally where in case there are no more periodic resource occasions during the subsequent time period, the processor controls the UE to perform the alternative small-data transmission mechanism at an opportunity next to the determining that there are no more periodic resource occasions, and
in case there are one or more periodic resource occasions during the subsequent time period,
• the processor successively attempts transmitting the available small data using the periodic resources at each of one or more subsequent periodic resource occasions during the subsequent time period, respectively including determining one of a plurality of synchronization signal blocks having the signal quality above the signal quality threshold,
• in case the UE determines for each of said one or more subsequent periodic resource occasions that there is no synchronization signal block having the signal quality above the signal quality threshold, the processor controls the UE to perform the alternative small-data transmission mechanism at an opportunity next to the last periodic resource occasion during the subsequent time period or next to the expiry of the subsequent time period.

9. The UE according to claim 8, wherein the one or more periodic resource occasions during the subsequent time period are associated with:
• one of the plurality of synchronization signal blocks, or
• the synchronization signal block having the highest signal quality among the plurality of synchronization signal blocks, or
• two or more of the plurality of synchronization blocks.

10. The UE according to claim 8 or 9, wherein the processor, when in operation, determines a value of the time period based on one or more of the following:
pre-configured time period information indicating one value of the time period, optionally wherein the pre-configured time period information is stored in the UE as part of an operating system of the UE or as part of subscriber information,
a time period configuration message, wherein the UE includes a receiver, which in operation, receives the time period configuration message from a serving base station, optionally wherein the time period configuration message is received from system information or is a message dedicated to the UE,
a periodicity of the periodic resources to be used for transmitting the available small data, wherein the processor, when in operation, determines the value of the time period as a multiple or a fraction of said periodicity, optionally wherein the processor, when in operation, determines a larger value of the time period for a smaller periodicity of the periodic resources and determines a smaller value of the time period for a larger periodicity of the periodic resources,
one of at least one logical channel with which the small data is associated, wherein the processor, when in operation, determines, from stored time period information, a value that is associated with said logical channel as the value of the time period, optionally wherein the processor determines the smallest value among plural values associated with plural logical channels with which the small data is associated as the value of the time period, optionally wherein value of the time period is determined based on one or more of traffic requirements, Quality of Service requirements, and priority of a logical channel,
the value of the time period is UE-specific.

11. The UE according to one of claims 1 to 10, wherein the processor, when in operation, determines the signal quality threshold among a plurality of signal quality thresholds,
wherein one or more of the plurality of signal quality thresholds are specific to one or more different transmission parameters that are usable by the UE for the transmission of small data, including one or more of different transport block sizes, different modulation schemes and different coding rates, and wherein the processor, when in operation, determines that signal quality threshold among the plurality of signal quality thresholds, as the signal quality threshold, that is associated with the one or more transmission parameters to be used by the UE for the transmission of the available small data,
optionally wherein at least some of the plurality of signal quality thresholds are defined based on that a higher value of the signal quality threshold is associated with one or more of a larger transport block size and a higher modulation scheme,
optionally wherein at least some the plurality of signal quality thresholds are defined based on that a lower value of the signal quality threshold is associated with one or more of a smaller transport block size and a lower modulation scheme.

12. The UE according to one of claims 1 to 11, where in case the processor succeeds in determining a synchronization signal block having the signal quality above the signal quality threshold:
• the processor, when in operation, determines periodic resources associated with that determined synchronization signal block,
and
• the transmitter, when in operation, transmits the available small data using the determined periodic resources.

13. The UE according to one of claims 1 to 12, wherein the UE is in an inactive state out of a connected state, an idle state and the inactive state, and/or
wherein instead of using the signal quality of the synchronization signal block, using the signal quality of a reference signal received over a same beam as the synchronization signal block, and/or
wherein the synchronization signal block includes one or more synchronization signals, including a Primary Synchronization Signal, PSS, and a Secondary Synchronization Signals, SSS, and optionally includes a Physical Broadcast Channel, PBCH, optionally wherein the signal quality is determined based on one or more of the synchronization signals of the synchronization signal block, and/or
wherein the random access procedure is a small-data-specific random access procedure or a non-small-data-specific random access procedure, optionally wherein the non-small-data-specific random access procedure is used when the UE is not configured for use of a small-data-specific random access procedure, optionally wherein one or more of radio resources and preambles usable for the non-small-data-specific and small-data-specific random access procedure are different from one another, and/or
wherein the small-data-specific random access procedure and the non-small-data-specific random access procedure include two steps or four steps, and the transmission of the available small data is performed with a first message of the two-step random access procedure, or with a third message of the four-step random access procedure, and/or
wherein the signal quality is one or more of a Reference Signal Received Power, RSRP, a Reference Signal Received Quality, RSRQ, and a Signal to Interference plus Noise Ratio, SINR.

14. A method comprising the following steps performed by a user equipment, UE:
determining that small data has become available for transmission, wherein the available small data is to be transmitted using periodic resources without a prior scheduling request from the UE,
wherein transmitting the available small data using the periodic resources includes a step of determining one of a plurality of synchronization signal blocks having a signal quality above a signal quality threshold,
in case of determining there is no synchronization signal block having the signal quality above the signal quality threshold:
• operating a time trigger control mechanism, and
• controlling the UE to perform an alternative small-data transmission mechanism, instead of transmitting the available small data using the periodic resources, according to the operated time trigger control mechanism,
wherein the alternative small-data transmission mechanism includes:
• transmitting the available small data using a random access procedure,
wherein the time trigger control mechanism is performed based on a timer.

15. A base station comprising:
a transmitter, which in operation, being configured to transmit a configuration message to a user equipment,
UE, for configuring the UE to transmit small data, which has become available for transmission, by using periodic resources without a prior scheduling request,
the transmitter, which in operation, being configured to transmit one or more synchronization signal blocks,
a processor, which in operation, being configured to determine one or more parameters for a time trigger control mechanism, which is operated by the UE in case the UE determines there is no synchronization signal block having a signal quality above a signal quality threshold and which is operated by the UE for controlling to perform an alternative small-data transmission mechanism, instead of transmitting the available small data using the periodic resources,
the transmitter, when in operation, being configured to transmit the one or more parameters for the time triggered control mechanism to the UE,
a receiver, which in operation, being configured to receive the available small data via the periodic resources
or via the alternative small-data transmission mechanism,
wherein the alternative small-data transmission mechanism includes:
• transmitting by the UE the available small data using a random access procedure, wherein the time trigger control mechanism is performed based on a timer.

## Patentansprüche

1. Benutzergerät (UE), mit:
einem Prozessor, der im Betrieb ausgebildet ist zu bestimmen, dass eine kleine Datenmenge zur Übertragung verfügbar geworden ist, wobei die verfügbare kleine Datenmenge unter Verwendung periodischer Ressourcen ohne eine vorherige Planungsanforderung seitens des UE zu übertragen ist, wobei das Senden der verfügbaren kleinen Datenmenge unter Verwendung der periodischen Ressourcen beinhaltet, dass der Prozessor im Betrieb ausgebildet ist, einen Signalblock aus einer Vielzahl von Synchronisationssignalblöcken zu bestimmen, der eine Signalqualität über einem Signalqualitätsschwellenwert aufweist,
falls der Prozessor bestimmt, dass kein Synchronisationssignalblock mit einer Signalqualität über dem Signalqualitätsschwellenwert vorhanden ist:
der Prozessor im Betrieb ausgebildet ist, einen Zeitauslösesteuerungsmechanismus zu betreiben, und
der Prozessor im Betrieb ausgebildet ist, das UE so zu steuern, dass es einen alternativen Übertragungsmechanismus für kleine Datenmengen, anstatt die verfügbare kleine Datenmenge unter Verwendung der periodischen Ressourcen zu übertragen, gemäß dem betriebenen Zeitauslösesteuerungsmechanismus ausführt, wobei der alternative Übertragungsmechanismus für kleine Datenmengen umfasst:
Senden der verfügbaren kleinen Datenmenge durch einen Sender des UE unter Verwendung eines Direktzugriffsverfahrens,
wobei der Prozessor ausgebildet ist, den Zeitauslösesteuerungsmechanismus auf der Grundlage eines Zeitgebers auszuführen.

2. UE gemäß Anspruch 1, wobei der Zeitauslösesteuerungsmechanismus gemäß einem Parameter so gesteuert wird, dass versucht wird, die Ausführung des alternativen Übertragungsmechanismus für kleine Datenmengen zu vermeiden,
wobei der Zeitauslösesteuerungsmechanismus optional von dem Prozessor gemäß dem Parameter betrieben wird, um es dem Prozessor zu ermöglichen, während des Betriebs die verfügbare kleine Datenmenge unter Verwendung der periodischen Ressourcen zu übertragen, einschließlich der Bestimmung eines der mehreren Synchronisationssignalblöcke, der die Signalqualität über dem Signalqualitätsschwellenwert für die auf periodischen Ressourcen basierende Übertragung der verfügbaren kleinen Datenmenge aufweist.

3. UE gemäß Anspruch 1 oder 2, wobei der Zeitgeber gemäß einem oder mehreren der folgenden Punkte betrieben wird:
Starten des Zeitgebers, wenn der Prozessor zum ersten Mal für die Übertragung der verfügbaren kleine Datenmenge bestimmt, dass kein Synchronisationssignalblock vorliegt, dessen Signalqualität über dem Signalqualitätsschwellenwert liegt,
während der gestartete Zeitgeber noch nicht abgelaufen ist,
der Prozessor versucht, die verfügbare kleine Datenmenge unter Verwendung der periodischen Ressourcen zu übertragen, was jeweils das Bestimmen eines der mehreren Synchronisationssignalblöcke mit einer Signalqualität oberhalb des Signalqualitätsschwellenwerts umfasst,
Anhalten des gestarteten Zeitgebers, falls es dem UE gelingt, die verfügbare kleine Datenmenge unter Verwendung der periodischen Ressource bei einem periodischen Ressourcenereignis zu übertragen,
wenn der Zeitgeber abgelaufen ist, Steuern der UE durch den Prozessor, um den alternativen Übertragungsmechanismus für kleine Datenmengen auszuführen.

4. UE gemäß Anspruch 1, wobei der Prozessor im Betrieb einen Wert des Zeitgebers auf der Grundlage bestimmt von:
einer vorkonfigurierten Zeitgeber-Information, die einen Wert des Zeitgebers angibt, wobei die vorkonfigurierte Zeitgeber-Information optional in dem UE als Teil eines Betriebssystems des UE oder als Teil einer Teilnehmerinformation gespeichert ist, und/oder
einer Zeitgeber-Konfigurationsnachricht, wobei das UE einen Empfänger hat, der im Betrieb die Zeitgeber-Konfigurationsnachricht von einer bedienenden Basisstation empfängt, wobei die Zeitgeber-Konfigurationsnachricht optional aus einer Systeminformation empfangen wird oder eine für das UE dedizierte Nachricht ist, und/oder
einer Periodizität der periodischen Ressourcen, die zum Senden der verfügbaren kleinen Datenmenge zu verwenden sind, wobei der Prozessor im Betrieb den Wert des Zeitgebers als ein Vielfaches oder einen Bruchteil der genannten Periodizität bestimmt, wobei der Prozessor im Betrieb optional einen größeren Wert des Zeitgebers für eine kleinere Periodizität der periodischen Ressourcen und einen kleineren Wert des Zeitgebers für eine größere Periodizität der periodischen Ressourcen bestimmt, und/oder
einem aus mindestens einem logischen Kanal, dem die kleine Datenmenge zugeordnet ist, wobei der Prozessor im Betrieb aus einer gespeicherten Zeitgeber-Information einen Wert, der dem logischen Kanal zugeordnet ist, als Wert des Zeitgebers bestimmt, wobei der Prozessor optional den kleinsten Wert unter mehreren Werten, die mehreren logischen Kanälen zugeordnet sind, mit denen die kleine Datenmenge assoziiert sind, als Wert des Zeitgebers bestimmt, wobei der Wert des Zeitgebers optional auf der Grundlage bestimmt wird: Verkehrsanforderungen und/oder Anforderungen an die Dienstgüte und/oder Priorität eines logischen Kanals,
wobei der Wert des Zeitgebers UE-spezifisch ist.

5. UE gemäß Anspruch 1 oder 2, wobei der Prozessor den Zeitauslösungssteuerungsmechanismus auf der Grundlage eines Zählers ausführt, der die Anzahl der Fälle zählt, in denen der Prozessor bestimmt, dass kein Synchronisationssignalblock vorhanden ist, dessen Signalqualität über dem Signalqualitätsschwellenwert für die Übertragung der verfügbaren kleinen Datenmenge liegt,
wobei der Zähler optional betrieben wird gemäß:
einer Erhöhung des Zählers jedes Mal, wenn der Prozessor bei einem periodischen Ressourcenereignis bestimmt, dass kein Synchronisationssignalblock mit einer Signalqualität oberhalb des Signalqualitätsschwellenwerts für die Übertragung der verfügbaren kleinen Datenmenge vorliegt, und/oder
solange der Zähler einen Zählerschwellenwert nicht erreicht hat,
Versuch des Prozessors, die verfügbare kleine Datenmenge unter Verwendung der periodischen Ressourcen zu übertragen, was jeweils das Bestimmen eines aus einer Vielzahl von Synchronisationssignalblöcken mit einer Signalqualität oberhalb des Signalqualitätsschwellenwerts umfasst,
einem Anhalten des Zählers, falls es dem UE gelingt, die verfügbare kleine Datenmenge unter Verwendung der periodischen Ressourcen bei einem periodischen Ressourcenereignis zu übertragen,
wenn der Zähler den Zählerschwellenwert erreicht, durch Steuern der UE mittels des Prozessors derart, dass der alternative Übertragungsmechanismus für kleine Datenmengen ausgeführt wird.

6. UE gemäß Anspruch 5, wobei der Prozessor im Betrieb einen Wert des Zählerschwellenwerts auf der Grundlage bestimmt von:
einer vorkonfigurierten Zählerinformation, die einen Wert des Zählerschwellenwerts angibt, wobei die vorkonfigurierte Zählerinformation optional in dem UE als Teil eines Betriebssystems des UE oder als Teil einer Teilnehmerinformation gespeichert ist, und/oder
einer Zählerkonfigurationsnachricht, wobei das UE einen Empfänger aufweist, der im Betrieb die Zählerkonfigurationsnachricht von einer bedienenden Basisstation empfängt, wobei optional die Zählerkonfigurationsnachricht aus einer Systeminformation empfangen wird oder eine Nachricht ist, die für das UE bestimmt ist, und/oder
einer Periodizität der periodischen Ressourcen, die zum Senden der verfügbaren kleinen Datenmenge zu verwenden sind, wobei der Prozessor im Betrieb den Wert des Zählerschwellenwerts als ein Vielfaches oder einen Bruchteil der genannten Periodizität bestimmt, wobei optional der Prozessor im Betrieb einen größeren Wert des Zählerschwellenwerts für eine kleinere Periodizität der periodischen Ressourcen bestimmt und einen kleineren Wert des Zählerschwellenwerts für eine größere Periodizität der periodischen Ressourcen bestimmt, und/oder
einem von mindestens einem logischen Kanal, dem die kleine Datenmenge zugeordnet ist, wobei der Prozessor im Betrieb aus einer gespeicherten Zählerinformation einen Wert, der dem logischen Kanal zugeordnet ist, als Wert des Zählerschwellenwerts bestimmt, optional wobei der Prozessor den kleinsten Wert unter mehreren Werten, die mehreren logischen Kanälen zugeordnet sind, mit denen die kleine Datenmenge assoziiert ist, als Wert des Zählerschwellenwerts bestimmt, optional wobei der Wert des Zählerschwellenwerts auf der Grundlage: Verkehrsanforderungen und/oder Anforderungen an die Dienstgüte und/oder Priorität eines logischen Kanals, und/oder
der Wert des Zählerschwellenwerts ist UE-spezifisch.

7. UE gemäß den Ansprüchen 1 und 5, wobei der Prozessor den Zeitauslösesteuerungsmechanismus auf der Grundlage einer Kombination aus dem Zeitgeber und dem Zähler ausführt, wobei der Prozessor das UE so steuert, dass es den alternativen Übertragungsmechanismus für kleine Datenmengen ausführt, wenn der Zähler den Zählerschwellenwert erreicht oder der Zeitgeber abläuft, je nachdem, was früher eintritt.

8. UE gemäß Anspruch 1 oder 2, wobei der Prozessor den Zeitauslösesteuerungsmechanismus auf der Grundlage dessen ausführt, ob während eines Zeitraums, der auf die Bestimmung folgt, dass kein Synchronisationssignalblock mit einer Signalqualität oberhalb des Signalqualitätsschwellenwerts für die Übertragung der verfügbaren kleinen Datenmenge vorhanden ist, ein oder mehrere periodische Ressourcenereignisse vorliegen,
wobei optional, falls während des nachfolgenden Zeitraums keine weiteren periodischen Ressourcenereignisse vorliegen, der Prozessor das UE so steuert, dass es den alternativen Übertragungsmechanismus für kleine Datenmengen bei einer Gelegenheit unmittelbar nach der Bestimmung ausführt, dass keine weiteren periodischen Ressourcenereignisse mehr vorliegen, und
falls während des nachfolgenden Zeitraums ein oder mehrere periodische Ressourcenereignisse vorliegen,
der Prozessor nacheinander versucht, die verfügbare kleine Datenmenge unter Verwendung der periodischen Ressourcen bei jedem des einen oder der mehreren nachfolgenden periodischen Ressourcenereignisse während des nachfolgenden Zeitraums zu übertragen, jeweils einschließlich der Bestimmung eines aus einer Vielzahl von Synchronisationssignalblöcken, dessen Signalqualität über dem Signalqualitätsschwellenwert liegt,
falls das UE für jedes des einen oder der mehreren nachfolgenden periodischen Ressourcenereignisse bestimmt, dass kein Synchronisationssignalblock vorhanden ist, dessen Signalqualität über dem Signalqualitätsschwellenwert liegt, der Prozessor das UE so steuert, dass es den alternativen Übertragungsmechanismus für kleine Datenmengen zu einer Gelegenheit ausführt, die unmittelbar auf das letzte periodische Ressourcenereignis während des nachfolgenden Zeitraums oder unmittelbar vor Ablauf des nachfolgenden Zeitraums folgt.

9. UE gemäß Anspruch 8, wobei das eine oder die mehreren periodischen Ressourcenereignisse während des nachfolgenden Zeitraums zugeordnet werden zu:
einem der mehreren Synchronisationssignalblöcke, oder
dem Synchronisationssignalblock mit der höchsten Signalqualität unter den mehreren Synchronisationssignalblöcken, oder
zwei oder mehr der mehreren Synchronisationsblöcke.

10. UE gemäß Anspruch 8 oder 9, wobei der Prozessor im Betrieb einen Wert des Zeitraums bestimmt auf der Grundlage von:
einer vorkonfigurierten Zeitrauminformation, die einen Wert des Zeitraums angibt, wobei die vorkonfigurierte Zeitrauminformation optional in dem UE als Teil eines Betriebssystems des UE oder als Teil einer Teilnehmerinformation gespeichert ist,
einer Zeitraumkonfigurationsnachricht, wobei das UE einen Empfänger hat, der im Betrieb die Zeitraumkonfigurationsnachricht von einer bedienenden Basisstation empfängt, wobei die Zeitraumkonfigurationsnachricht optional aus einer Systeminformation empfangen wird oder eine für das UE bestimmte Nachricht ist,
einer Periodizität der periodischen Ressourcen, die zum Senden der verfügbaren kleinen Datenmenge zu verwenden sind, wobei der Prozessor im Betrieb den Wert des Zeitraums als ein Vielfaches oder einen Bruchteil der genannten Periodizität bestimmt, wobei der Prozessor im Betrieb optional einen größeren Wert des Zeitraums für eine kleinere Periodizität der periodischen Ressourcen und einen kleineren Wert des Zeitraums für eine größere Periodizität der periodischen Ressourcen bestimmt,
einem von mindestens einem logischen Kanal, dem die kleine Datenmenge zugeordnet ist, wobei der Prozessor im Betrieb aus einer gespeicherten Zeitrauminformation einen Wert, der dem logischen Kanal zugeordnet ist, als Wert des Zeitraums bestimmt, wobei der Prozessor optional den kleinsten Wert unter mehreren Werten, die mehreren logischen Kanälen zugeordnet sind, mit denen die kleine Datenmenge assoziiert ist, als Wert des Zeitraums bestimmt, wobei der Wert des Zeitraums optional auf der Grundlage bestimmt wird: Verkehrsanforderungen und/oder Anforderungen an die Dienstgüte und/oder Priorität eines logischen Kanals,
der Wert der Zeitdauer UE-spezifisch ist.

11. UE gemäß einem der Ansprüche 1 bis 10, wobei der Prozessor im Betrieb den Signalqualitätsschwellenwert aus einer Vielzahl von Signalqualitätsschwellenwerten bestimmt, wobei einer oder mehrere der Vielzahl von Signalqualitätsschwellenwerten spezifisch für einen oder mehrere verschiedene Übertragungsparameter sind, die von dem UE für die Übertragung von kleinen Datenmengen verwendet werden können, einschließlich einer oder mehrerer verschiedener Transportblockgrößen, verschiedene Modulationsschemata und verschiedene Codierungsraten, und wobei der Prozessor im Betrieb denjenigen Signalqualitätsschwellenwert aus der Vielzahl von Signalqualitätsschwellenwerten als den Signalqualitätsschwellenwert bestimmt, der mit dem einen oder den mehreren Übertragungsparametern assoziiert ist, die von dem UE für die Übertragung der verfügbaren kleinen Datenmenge zu verwenden sind,
wobei optional zumindest einige der mehreren Signalqualitätsschwellenwerte so definiert sind, dass ein höherer Wert des Signalqualitätsschwellenwerts assoziiert ist mit: einer größeren Transportblockgröße und/oder einem höheren Modulationsschema,
wobei optional zumindest einige der mehreren Signalqualitätsschwellenwerte so definiert sind, dass ein niedrigerer Wert des Signalqualitätsschwellenwerts assoziiert ist mit: einer kleineren Transportblockgröße und/oder einem niedrigeren Modulationsschema.

12. UE gemäß einem der Ansprüche 1 bis 11, wobei für den Fall, dass es dem Prozessor gelingt, einen Synchronisationssignalblock mit einer Signalqualität oberhalb des Signalqualitätsschwellenwerts zu bestimmen:
der Prozessor im Betrieb periodische Ressourcen ermittelt, die mit dem ermittelten Synchronisationssignalblock assoziiert sind, und
der Sender im Betrieb die verfügbare kleine Datenmenge unter Verwendung der bestimmten periodischen Ressourcen überträgt.

13. UE gemäß einem der Ansprüche 1 bis 12, wobei sich das UE in einem inaktiven Zustand befindet in Form eines verbundenen Zustands, eines Ruhezustands oder des inaktiven Zustands, und/oder
wobei anstelle der Verwendung der Signalqualität des Synchronisationssignalblocks die Signalqualität eines Referenzsignals verwendet wird, das über denselben Datenstrahl wie der Synchronisationssignalblock empfangen wird, und/oder
wobei der Synchronisationssignalblock ein oder mehrere Synchronisationssignale umfasst, einschließlich eines Primärsynchronisationssignals (PSS) und eines Sekundärsynchronisationssignals (SSS), und optional einen physikalischen Rundfunkkanal, PBCH, umfasst, wobei optional die Signalqualität auf der Grundlage eines oder mehrerer der Synchronisationssignale des Synchronisationssignalblocks bestimmt wird, und/oder
wobei das Direktzugriffsverfahren ein für kleine Datenmengen spezifisches Direktzugriffsverfahren oder ein nicht für kleine Datenmengen spezifisches Direktzugriffsverfahren ist, wobei optional das nicht für kleine Datenmengen spezifische Direktzugriffsverfahren verwendet wird, wenn das UE nicht für die Verwendung eines für kleine Datenmengen spezifischen Direktzugriffsverfahrens konfiguriert ist, wobei optional sich eines oder mehrere der für nicht für kleine Datenmengen spezifische und für kleine Datenmengen spezifischen Direktzugriffsverfahren voneinander unterscheiden, und/oder
wobei das für kleine Datenmengen spezifische Direktzugriffsverfahren und das nicht für kleine Datenmengen spezifische Direktzugriffsverfahren zwei Schritte oder vier Schritte umfassen und die Übertragung der verfügbaren kleinen Datenmenge mit einer ersten Nachricht des zweistufigen Direktzugriffsverfahrens oder mit einer dritten Nachricht des vierstufigen Direktzugriffsverfahrens durchgeführt wird, und/oder
wobei die Signalqualität eine Referenzsignal-Empfangsleistung, RSRP, und/oder eine Referenzsignal-Empfangsqualität, RSRQ, und/oder ein Signal-zu-Interferenz-plus-RauschVerhältnis, SINR, ist.

14. Verfahren, das die folgenden von einem Benutzergerät, UE, ausgeführten Schritte umfasst:
Bestimmen, dass eine kleine Datenmenge zur Übertragung verfügbar geworden ist, wobei die verfügbare kleine Datenmenge unter Verwendung periodischer Ressourcen ohne eine vorherige Planungsanforderung von der UE zu übertragen ist,
wobei das Übertragen der verfügbaren kleinen Datenmenge unter Verwendung der periodischen Ressourcen einen Schritt des Bestimmens eines Signalblocks aus einer Vielzahl von Synchronisationssignalblöcken mit einer Signalqualität oberhalb eines Signalqualitätsschwellenwerts umfasst,
im Falle des Bestimmens, dass kein Synchronisationssignalblock mit der Signalqualität oberhalb des Signalqualitätsschwellenwerts vorhanden ist:
Betreiben eines Zeitauslösesteuerungsmechanismus und
Steuern des UE, um einen alternativen Übertragungsmechanismus für kleine Datenmengen, anstelle der Übertragung der verfügbaren kleinen Datenmengemenge unter Verwendung der periodischen Ressourcen, gemäß dem betriebenen Zeitauslösesteuerungsmechanismus auszuführen,
wobei der alternative Übertragungsmechanismus für kleine Datenmengen umfasst:
Senden der verfügbaren kleinen Datenmengemenge unter Verwendung eines Direktzugriffsverfahrens,
wobei der Zeitauslösesteuerungsmechanismus auf der Grundlage eines Zeitgebers ausgeführt wird.

15. Basisstation, mit:
einem Sender, der im Betrieb ausgebildet ist, eine Konfigurationsnachricht an ein Benutzergerät, UE, zu senden, um das UE so zu konfigurieren, dass es eine kleine Datenmenge, die zur Übertragung verfügbar geworden ist, unter Verwendung periodischer Ressourcen ohne vorherige Planungsanforderung überträgt, wobei der Sender im Betrieb ausgebildet ist, einen oder mehrere Synchronisationssignalblöcke zu senden,
einem Prozessor, der im Betrieb ausgebildet ist, einen oder mehrere Parameter für einen Zeitauslösesteuerungsmechanismus zu bestimmen, der von der UE betrieben wird, falls die UE bestimmt, dass kein Synchronisationssignalblock mit einer Signalqualität oberhalb eines Signalqualitätsschwellenwerts vorliegt, und der von der UE betrieben wird, um die Ausführung eines alternativen Übertragungsmechanismus für kleine Datenmengen zu steuern, anstatt die verfügbare kleine Datenmengemenge unter Verwendung der periodischen Ressourcen zu übertragen,
wobei der Sender im Betrieb ausgebildet ist, einen oder mehrere Parameter für den Zeitauslösesteuerungsmechanismus an das UE zu übertragen,
einem Empfänger, der im Betrieb ausgebildet ist, die verfügbare kleine Datenmenge über die periodischen Ressourcen oder über den alternativen Übertragungsmechanismus für kleine Datenmengen zu empfangen,
wobei der alternative Übertragungsmechanismus für kleine Datenmengen umfasst:
Übertragen der verfügbaren kleinen Datenmenge durch das UE unter Verwendung eines Direktzugriffsverfahrens,
wobei der Zeitauslösesteuerungsmechanismus auf der Grundlage eines Zeitgebers ausgeführt wird.

## Revendications

1. Équipement utilisateur, UE, comprenant :
un processeur qui, en fonctionnement, est configuré pour déterminer que des petites données sont devenues disponibles pour la transmission, dans lequel les petites données disponibles doivent être transmises en utilisant des ressources périodiques sans requête de planification préalable provenant de l'UE,
dans lequel la transmission des petites données disponibles en utilisant les ressources périodiques comprend le fait que le processeur, en fonctionnement, est configuré pour déterminer l'un parmi une pluralité de blocs de signaux de synchronisation ayant une qualité de signal supérieure à un seuil de qualité de signal,
dans le cas où le processeur détermine qu'il n'existe aucun bloc de signaux de synchronisation ayant la qualité de signal supérieure au seuil de qualité de signal :
• le processeur, lorsqu'il est en fonctionnement, est configuré pour actionner un mécanisme de commande de déclenchement temporel, et
• le processeur, lorsqu'il est en fonctionnement, est configuré pour commander l'UE afin de réaliser un mécanisme alternatif de transmission de petites données, au lieu de transmettre les petites données disponibles en utilisant les ressources périodiques, conformément au mécanisme de commande de déclenchement temporel actionné,
dans lequel le mécanisme alternatif de transmission de petites données comprend :
• la transmission, par un émetteur de l'UE, des petites données disponibles en utilisant une procédure d'accès aléatoire,
dans lequel le processeur est configuré pour réaliser le mécanisme de commande de déclenchement temporel sur la base d'un temporisateur.

2. UE selon la revendication 1, dans lequel le mécanisme de commande de déclenchement temporel est commandé, conformément à un paramètre, de manière à tenter d'éviter la réalisation du mécanisme alternatif de transmission de petites données,
éventuellement dans lequel le mécanisme de commande de déclenchement temporel est actionné par le processeur, conformément au paramètre, de manière à permettre au processeur, lorsqu'il est en fonctionnement, de transmettre les petites données disponibles en utilisant les ressources périodiques, incluant la détermination de l'un parmi la pluralité de blocs de signaux de synchronisation ayant la qualité de signal supérieure au seuil de qualité de signal pour la transmission basée sur les ressources périodiques des petites données disponibles.

3. UE selon la revendication 1 ou 2, dans lequel le temporisateur est actionné selon un ou plusieurs de ce qui suit :
• le démarrage du temporisateur lorsque le processeur détermine, pour la première fois pour la transmission des petites données disponibles, qu'il n'existe aucun bloc de signaux de synchronisation ayant la qualité de signal supérieure au seuil de qualité de signal,
• tant que le temporisateur démarré n'a pas expiré :
∘ le processeur tente de transmettre les petites données disponibles en utilisant les ressources périodiques, comprenant respectivement la détermination de l'un parmi la pluralité de blocs de signaux de synchronisation ayant la qualité de signal supérieure au seuil de qualité de signal,
∘ l'arrêt du temporisateur démarré, dans le cas où l'UE réussit à transmettre les petites données disponibles en utilisant la ressource périodique lors d'une occasion de ressources périodiques,
• lorsque le temporisateur expire, le processeur commande l'UE pour réaliser le mécanisme alternatif de transmission de petites données.

4. UE selon la revendication 1, dans lequel le processeur, lorsqu'il est en fonctionnement, détermine une valeur du temporisateur sur la base d'un ou plusieurs de ce qui suit :
des informations de temporisateur préconfigurées indiquant une valeur du temporisateur, éventuellement dans lequel les informations de temporisateur préconfigurées sont stockées dans l'UE en tant que partie du système d'exploitation de l'UE ou en tant que partie des informations d'abonné,
un message de configuration de temporisateur, dans lequel l'UE comprend un récepteur qui, en fonctionnement, reçoit le message de configuration de temporisateur depuis une station de base de service, éventuellement dans lequel le message de configuration de temporisateur est reçu à partir des informations système ou est un message dédié à l'UE,
une périodicité des ressources périodiques à utiliser pour la transmission des petites données disponibles, dans lequel le processeur, lorsqu'il est en fonctionnement, détermine la valeur du temporisateur comme un multiple ou une fraction de ladite périodicité, éventuellement dans lequel le processeur, lorsqu'il est en fonctionnement, détermine une valeur plus grande du temporisateur pour une périodicité plus petite des ressources périodiques et détermine une valeur plus petite du temporisateur pour une périodicité plus grande des ressources périodiques,
l'un parmi au moins un canal logique avec lequel les petites données sont associées, dans lequel le processeur, lorsqu'il est en fonctionnement, détermine, à partir des informations de temporisateur stockées, une valeur qui est associée audit canal logique comme étant la valeur du temporisateur, éventuellement dans lequel le processeur détermine la valeur la plus petite parmi plusieurs valeurs associées à plusieurs canaux logiques avec lesquels les petites données sont associées comme étant la valeur du temporisateur, éventuellement dans lequel la valeur du temporisateur est déterminée sur la base d'une ou de plusieurs parmi des exigences de trafic, des exigences de Qualité de Service et une priorité d'un canal logique,
la valeur du temporisateur est spécifique à l'UE.

5. UE selon la revendication 1 ou 2, dans lequel le processeur réalise le mécanisme de commande de déclenchement temporel sur la base d'un compteur, qui compte le nombre de fois où le processeur détermine qu'il n'existe aucun bloc de signaux de synchronisation ayant la qualité de signal supérieure au seuil de qualité de signal pour la transmission des petites données disponibles,
éventuellement dans lequel le compteur est actionné selon un ou plusieurs de ce qui suit :
• l'incrémentation du compteur chaque fois que le processeur détermine, pour une occasion des ressources périodiques, qu'il n'existe aucun bloc de signaux de synchronisation ayant la qualité de signal qui est supérieure au seuil de qualité de signal pour la transmission des petites données disponibles,
• tant que le compteur n'a pas atteint un seuil de compteur :
∘ le processeur tente de transmettre les petites données disponibles en utilisant les ressources périodiques, comprenant respectivement la détermination de l'un parmi une pluralité de blocs de signaux de synchronisation ayant la qualité de signal supérieure au seuil de qualité de signal,
∘ l'arrêt du compteur, dans le cas où l'UE réussit à transmettre les petites données disponibles en utilisant les ressources périodiques lors d'une occasion de ressources périodiques,
• lorsque le compteur atteint le seuil de compteur, le processeur commande l'UE pour réaliser le mécanisme alternatif de transmission de petites données.

6. UE selon la revendication 5, dans lequel le processeur, lorsqu'il est en fonctionnement, détermine une valeur du seuil de compteur sur la base d'un ou plusieurs de ce qui suit :
des informations de compteur préconfigurées indiquant une valeur du seuil de compteur, éventuellement dans lequel les informations de compteur préconfigurées sont stockées dans l'UE en tant que partie du système d'exploitation de l'UE ou en tant que partie des informations d'abonné,
un message de configuration de compteur, dans lequel l'UE comprend un récepteur qui, en fonctionnement, reçoit le message de configuration de compteur depuis une station de base de service, éventuellement dans lequel le message de configuration de compteur est reçu à partir des informations système ou est un message dédié à l'UE,
une périodicité des ressources périodiques à utiliser pour la transmission des petites données disponibles, dans lequel le processeur, lorsqu'il est en fonctionnement, détermine la valeur du seuil de compteur comme un multiple ou une fraction de ladite périodicité, éventuellement dans lequel le processeur, lorsqu'il est en fonctionnement, détermine une valeur plus grande du seuil de compteur pour une périodicité plus petite des ressources périodiques et détermine une valeur plus petite du seuil de compteur pour une périodicité plus grande des ressources périodiques,
l'un parmi au moins un canal logique avec lequel les petites données sont associées, dans lequel le processeur, lorsqu'il est en fonctionnement, détermine, à partir des informations de compteur stockées, une valeur qui est associée audit canal logique comme étant la valeur du seuil de compteur, éventuellement dans lequel le processeur détermine la valeur la plus petite parmi plusieurs valeurs associées à plusieurs canaux logiques avec lesquels les petites données sont associées comme étant la valeur du seuil de compteur, éventuellement dans lequel la valeur du seuil de compteur est déterminée sur la base d'une ou de plusieurs parmi des exigences de trafic, des exigences de Qualité de Service et une priorité d'un canal logique,
la valeur du seuil de compteur est spécifique à l'UE.

7. UE selon les revendications 1 et 5, dans lequel le processeur réalise le mécanisme de commande de déclenchement temporel sur la base d'une combinaison du temporisateur et du compteur, dans lequel le processeur commande l'UE pour réaliser le mécanisme alternatif de transmission de petites données lorsque le compteur atteint le seuil de compteur ou que le temporisateur expire, selon la première éventualité.

8. UE selon la revendication 1 ou 2, dans lequel le processeur réalise le mécanisme de commande de déclenchement temporel, selon l'existence d'une ou de plusieurs occasions de ressources périodiques au cours d'une période de temps suivant la détermination qu'il n'existe aucun bloc de signaux de synchronisation ayant la qualité de signal supérieure au seuil de qualité de signal pour la transmission des petites données disponibles,
éventuellement, dans le cas où il n'existe plus d'occasions de ressources périodiques au cours de la période de temps subséquente, le processeur commande l'UE pour réaliser le mécanisme alternatif de transmission de petites données à une opportunité suivante à la détermination qu'il n'existe plus d'occasions de ressources périodiques, et
dans le cas où il existe une ou plusieurs occasions de ressources périodiques au cours de la période de temps subséquente,
• le processeur tente successivement de transmettre les petites données disponibles en utilisant les ressources périodiques à chacune d'une ou de plusieurs occasions de ressources périodiques subséquentes au cours de la période de temps subséquente, comprenant respectivement la détermination de l'un parmi une pluralité de blocs de signaux de synchronisation ayant la qualité de signal supérieure au seuil de qualité de signal,
• dans le cas où l'UE détermine, pour chacune desdites une ou plusieurs occasions de ressources périodiques subséquentes, qu'il n'existe aucun bloc de signaux de synchronisation ayant la qualité de signal supérieure au seuil de qualité de signal, le processeur commande l'UE pour réaliser le mécanisme alternatif de transmission de petites données à une opportunité suivante à la dernière occasion de ressources périodiques au cours de la période de temps subséquente ou à l'expiration de la période de temps subséquente.

9. UE selon la revendication 8, dans lequel la ou les plusieurs occasions de ressources périodiques au cours de la période de temps subséquente sont associées à :
• l'un de la pluralité de blocs de signaux de synchronisation, ou
• le bloc de signaux de synchronisation ayant la qualité de signal la plus élevée parmi la pluralité de blocs de signaux de synchronisation, ou
• deux ou plus de la pluralité de blocs de signaux de synchronisation.

10. UE selon la revendication 8 ou 9, dans lequel le processeur, lorsqu'il est en fonctionnement, détermine une valeur de la période de temps sur la base d'un ou plusieurs de ce qui suit :
des informations de période de temps préconfigurées indiquant une valeur de la période de temps, éventuellement dans lequel les informations de période de temps préconfigurées sont stockées dans l'UE en tant que partie du système d'exploitation de l'UE ou en tant que partie des informations d'abonné,
un message de configuration de période de temps, dans lequel l'UE comprend un récepteur qui, en fonctionnement, reçoit le message de configuration de période de temps depuis une station de base de service, éventuellement dans lequel le message de configuration de période de temps est reçu à partir des informations système ou est un message dédié à l'UE,
une périodicité des ressources périodiques à utiliser pour la transmission des petites données disponibles, dans lequel le processeur, lorsqu'il est en fonctionnement, détermine la valeur de la période de temps comme un multiple ou une fraction de ladite périodicité, éventuellement dans lequel le processeur, lorsqu'il est en fonctionnement, détermine une valeur plus grande de la période de temps pour une périodicité plus petite des ressources périodiques et détermine une valeur plus petite de la période de temps pour une périodicité plus grande des ressources périodiques,
l'un parmi au moins un canal logique avec lequel les petites données sont associées, dans lequel le processeur, lorsqu'il est en fonctionnement, détermine, à partir des informations de période de temps stockées, une valeur qui est associée audit canal logique comme étant la valeur de la période de temps, éventuellement dans lequel le processeur détermine la valeur la plus petite parmi plusieurs valeurs associées à plusieurs canaux logiques avec lesquels les petites données sont associées comme étant la valeur de la période de temps, éventuellement dans lequel la valeur de la période de temps est déterminée sur la base d'une ou de plusieurs parmi des exigences de trafic, des exigences de qualité de service et une priorité d'un canal logique,
la valeur de la période de temps est spécifique à l'UE.

11. UE selon l'une des revendications 1 à 10, dans lequel le processeur, lorsqu'il est en fonctionnement, détermine le seuil de qualité de signal parmi une pluralité de seuils de qualité de signal,
dans lequel un ou plusieurs de la pluralité de seuils de qualité de signal sont spécifiques à un ou plusieurs paramètres de transmission différents qui sont utilisables par l'UE pour la transmission des petites données, comprenant un ou plusieurs parmi différentes tailles de blocs de transport, différents schémas de modulation et différents taux de codage, et dans lequel le processeur, lorsqu'il est en fonctionnement, détermine le seuil de qualité de signal parmi la pluralité de seuils de qualité de signal, comme étant le seuil de qualité de signal, qui est associé au ou aux plusieurs paramètres de transmission à utiliser par l'UE pour la transmission des petites données disponibles,
éventuellement dans lequel au moins certains de la pluralité de seuils de qualité de signal sont définis sur la base du fait qu'une valeur plus élevée du seuil de qualité de signal est associée à un ou plusieurs parmi une taille de bloc de transport plus grande et un schéma de modulation plus élevé,
éventuellement dans lequel au moins certains de la pluralité de seuils de qualité de signal sont définis sur la base du fait qu'une valeur plus faible du seuil de qualité de signal est associée à un ou plusieurs parmi une taille de bloc de transport plus petite et un schéma de modulation plus faible.

12. UE selon l'une des revendications 1 à 11, dans lequel, dans le cas où le processeur réussit à déterminer un bloc de signaux de synchronisation ayant la qualité de signal supérieure au seuil de qualité de signal :
• le processeur, lorsqu'il est en fonctionnement, détermine des ressources périodiques associées à ce bloc de signaux de synchronisation déterminé,
et
• l'émetteur, lorsqu'il est en fonctionnement, transmet les petites données disponibles en utilisant les ressources périodiques déterminées.

13. UE selon l'une des revendications 1 à 12, dans lequel l'UE est dans un état inactif parmi un état connecté, un état veille et l'état inactif, et/ou
dans lequel, au lieu d'utiliser la qualité de signal du bloc de signaux de synchronisation, la qualité de signal d'un signal de référence reçu sur le même faisceau que le bloc de signaux de synchronisation est utilisée, et/ou
dans lequel le bloc de signaux de synchronisation comprend un ou plusieurs signaux de synchronisation, y compris un signal de synchronisation primaire, PSS et un signal de synchronisation secondaire, SSS, et comprend éventuellement un canal de diffusion physique, PBCH, éventuellement dans lequel la qualité de signal est déterminée sur la base d'un ou plusieurs des signaux de synchronisation du bloc de signaux de synchronisation, et/ou
dans lequel la procédure d'accès aléatoire est une procédure d'accès aléatoire spécifique aux petites données ou une procédure d'accès aléatoire non spécifique aux petites données, éventuellement dans lequel la procédure d'accès aléatoire non spécifique aux petites données est utilisée lorsque l'UE n'est pas configuré pour l'utilisation d'une procédure d'accès aléatoire spécifique aux petites données, éventuellement dans lequel un ou plusieurs des ressources radio et des préambules utilisables pour les procédures d'accès aléatoire spécifique aux petites données et non spécifique aux petites données sont différents les uns des autres, et/ou
dans lequel la procédure d'accès aléatoire spécifique aux petites données et la procédure d'accès aléatoire non spécifique aux petites données comprennent deux étapes ou quatre étapes, et la transmission des petites données disponibles est réalisée avec un premier message de la procédure d'accès aléatoire en deux étapes, ou avec un troisième message de la procédure d'accès aléatoire en quatre étapes, et/ou
dans lequel la qualité de signal est un ou plusieurs parmi une puissance reçue de signal de référence, RSRP, une qualité reçue de signal de référence, RSRQ, et un rapport signal sur interférence plus bruit, SINR.

14. Procédé comprenant les étapes suivantes réalisées par un équipement utilisateur, UE :
la détermination que des petites données sont devenues disponibles pour la transmission, dans lequel les petites données disponibles doivent être transmises en utilisant des ressources périodiques sans requête de planification préalable provenant de l'UE,
dans lequel la transmission des petites données disponibles en utilisant les ressources périodiques comprend une étape de détermination de l'un parmi une pluralité de blocs de signaux de synchronisation ayant une qualité de signal supérieure à un seuil de qualité de signal,
dans le cas où il est déterminé qu'il n'existe aucun bloc de signaux de synchronisation ayant la qualité de signal supérieure au seuil de qualité de signal :
• l'actionnement d'un mécanisme de commande de déclenchement temporel, et
• la commande de l'UE pour réaliser un mécanisme alternatif de transmission de petites données, au lieu de transmettre les petites données disponibles en utilisant les ressources périodiques, conformément au mécanisme de commande de déclenchement temporel actionné,
dans lequel le mécanisme alternatif de transmission de petites données comprend :
• la transmission des petites données disponibles en utilisant une procédure d'accès aléatoire,
dans lequel le mécanisme de commande de déclenchement temporel est réalisé sur la base d'un temporisateur.

15. Station de base comprenant :
un émetteur qui, en fonctionnement, est configuré pour transmettre un message de configuration à un équipement utilisateur, UE, afin de configurer l'UE pour transmettre des petites données, qui sont devenues disponibles pour la transmission, en utilisant des ressources périodiques sans requête de planification préalable,
l'émetteur, lorsqu'il est fonctionnement, étant configuré pour transmettre un ou plusieurs blocs de signaux de synchronisation,
un processeur qui, en fonctionnement, est configuré pour déterminer un ou plusieurs paramètres pour un mécanisme de commande de déclenchement temporel, qui est actionné par l'UE dans le cas où l'UE détermine qu'il n'existe aucun bloc de signaux de synchronisation ayant une qualité de signal supérieure à un seuil de qualité de signal, et qui est actionné par l'UE pour commander la réalisation d'un mécanisme alternatif de transmission de petites données, au lieu de transmettre les petites données disponibles en utilisant les ressources périodiques,
l'émetteur, lorsqu'il est en fonctionnement, étant configuré pour transmettre le ou les plusieurs paramètres pour le mécanisme de commande de déclenchement temporel à l'UE,
un récepteur qui, en fonctionnement, est configuré pour recevoir les petites données disponibles via les ressources périodiques ou via le mécanisme alternatif de transmission de petites données,
dans lequel le mécanisme alternatif de transmission de petites données comprend :
la transmission, par l'UE, des petites données disponibles en utilisant une procédure d'accès aléatoire, dans lequel le mécanisme de commande de déclenchement temporel est réalisé sur la base d'un temporisateur.
